# EUROPÄISCHE PATENTSCHRIFT

(11) **EP 2 432 807 B1**
(45) Veröffentlichungstag und Bekanntmachung des Hinweises auf die Patenterteilung: **01.01.2014**
(21) Anmeldenummer: 10719349.2
(22) Anmeldetag: 17.05.2010
(51) Int. Cl.: C08F 220/34, C08F 220/56, C08F 220/58

(54) **HYDROPHOB ASSOZIIERENDE COPOLYMERE**
HYDROPHOBICALLY ASSOCIATING COPOLYMERS
COPOLYMÈRES ASSOCIATIFS À GROUPES HYDROPHOBES

(30) Priorität: 20.05.2009 EP 09160799
(43) Veröffentlichungstag der Anmeldung: 28.03.2012
(60) Teilanmeldung: 12188875.4
(73) Patentinhaber: BASF SE, 67056 Ludwigshafen (DE)
(72) Erfinder: REICHENBACH-KLINKE, Roland, 83278 Traunstein (DE); PFEUFFER, Thomas, 97437 Haßfurt (Sylbach) (DE); SCHMIDT, Kati, Pudong New District Shanghai 200120 (CN); OSTROWSKI, Thomas, 68199 Mannheim (DE); LEYRER, Reinhold, J., 67125 Dannstadt-Schauernheim (DE); FOGEL, Yulia, 83278 Traunstein (DE); FRIEDRICH, Stefan, 84518 Garching (DE); GAEBERLEIN, Peter, 39104 Magdeburg (DE); ORLEANS, Andrea, 83308 Trostberg (DE); SCHUHBECK, Manfred, 83278 Traunstein (DE); GUZMANN, Marcus, 69242 Mühlhausen (DE); RÖSCH, Markus, 55276 Oppenheim (DE); LANGLOTZ, Björn, 83308 Trostberg (DE)
(86) Internationale Anmeldenummer: PCT/EP2010/056685
(87) Internationale Veröffentlichungsnummer: WO 2010/133527

(56) Entgegenhaltungen:
- EP-A2- 1 069 139
- DE-C1- 3 925 220

## Beschreibung

Die vorliegende Erfindung betrifft wasserlösliche, hydrophob assoziierende Copolymere, welche neuartige hydrophob assoziierende Monomere enthalten. Die Monomere umfassen eine ethylenisch ungesättigte Gruppe sowie eine Polyethergruppe mit Blockstruktur aus einem hydrophilen Polyalkylenoxidblock, welcher im Wesentlichen aus Ethylenoxidgruppen besteht, und einem terminalen, hydrophoben Polyalkylenoxidblock, welcher aus Alkylenoxiden mit mindestens 4 Kohlenstoffatomen, bevorzugt mindestens 5 Kohlenstoffatomen besteht.

Wasserlösliche, verdickend wirkende Polymere werden in vielen Bereichen der Technik eingesetzt, beispielsweise im Bereich der Kosmetik, in Lebensmitteln, zur Herstellung von Reinigungsmitteln, Druckfarben, Dispersionsfarben oder bei der Erdölförderung.

Es sind viele chemisch unterschiedliche Klassen von Polymeren bekannt, welche als Verdicker eingesetzt werden können. Eine wichtige Klasse verdickend wirkender Polymere sind die sogenannten hydrophob assoziierenden Polymere. Hierunter versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium verdickt wird.

EP 705 854 A1, DE 100 37 629 A1 und DE 10 2004 032 304 A1 offenbaren wasserlösliche, hydrophob assoziierende Copolymere und deren Verwendung, beispielsweise im Bereich der Bauchemie. Die beschriebenen Copolymere umfassen saure Monomere wie beispielsweise Acrylsäure, Vinylsulfonsäure, Acrylamidomethylpropansulfonsäure, basische Monomere wie Acrylamid, Dimethylacrylamid oder kationische Gruppen umfassenden Monomeren, wie beispielsweise Ammoniumgruppen aufweisende Monomere. Derartige Monomere verleihen den Polymeren die Wasserlöslichkeit. Als hydrophob assoziierende Monomere enthalten die offenbarten Copolymere jeweils Monomere des nachfolgenden Typs: H₂C=C(R^{x})-COO-(-CH₂-CH₂-O-)_{q}-R^{y} oder auch H₂C=C(R^{x})-O-(-CH₂-CH₂-O-)_{q}-R^{y} wobei R^{x} typischerweise für H oder CH₃ und R^{y} für einen größeren Kohlenwasserstoffrest steht, typischerweise für Kohlenwasserstoffreste mit 8 bis 40 Kohlenstoffatomen. In den Schriften genannt sind beispielsweise längere Alkylgruppen oder auch eine Tristyrylphenylgruppe.

Eine weitere wichtige Klasse hydrophob assoziierender Copolymere sind alkalilösliche Dispersionen, wie sie beispielsweise von EP 13 836 A1 oder WO 2009/019225 offenbart sind. Derartige Dispersionen umfassen einerseits saure Monomere, insbesondere Acrylsäure, die bereits genannten hydrophob assoziierenden Monomere sowie nicht hydrophile Monomere, wie beispielsweise Alkylacrylate. Derartige Copolymere liegen im sauren pH-Bereich als Dispersion vor, bilden aber im alkalischen pH-Bereich eine Lösung und entfalten so ihre verdickende Wirkung.

Polymere, welche Polyethylenoxid-Blöcke, Blöcke aus höheren Alkylenoxiden sowie zusätzlich ethylenisch ungesättigte Gruppen aufweisen, sind auch aus anderen Bereichen der Technik bekannt.

WO 2004/044035 A1 offenbart Polyoxyalkylen-Blockcopolymere mit einem Block aus Polystyroloxid, welche als Emulgatoren zur Herstellung von Dispersionen eingesetzt werden können. In den Beispielen werden Verbindungen offenbart, bei denen Allylalkohol oder Hydroxybutylvinylether zunächst mit einer Polystyroloxidgruppe und anschließend mit einer Polyethylenoxidgruppe als terminaler Gruppe versehen wird. Die terminale Gruppe kann optional noch weiter funktionalisiert werden, beispielsweise mit Säuregruppen. Das beschriebene Blockcopolymer wird zur Herstellung von Styrol-Acrylat-Dispersionen eingesetzt.

WO 2004/026468 A1 offenbart Blockcopolymere aus einem Alkylenoxid-Block, einem Block aus Glycidylethern sowie einem Alkylenoxid-Block, wobei die Blockcopolymere eine ethylenisch ungesättigte Kopfgruppe aufweisen. Die terminale Gruppe kann zusätzlich mit Säuregruppen funktionalisiert sein. Die Blockcopolymere werden als polymerisierbare Emulgatoren verwendet. Die Verwendung zur Herstellung wasserlöslicher, hydrophob assoziierender Copolymere ist nicht erwähnt.

EP 1 069 139 A2 offenbart wässrige Dispersionen, welche durch Polymerisation ethylenisch ungesättigter wasserunlöslicher Verbindungen in Gegenwart eines wasserlöslichen Allyl- oder Vinylethers erhalten werden. Die Allyl- bzw. Vinylether weisen eine Polyalkylenoxidgruppe auf, welche aus C₂- bis C₄-Alkylenoxiden gebildet wird, wobei zwingend Ethylenoxideinheiten vorhanden sein müssen. Die Alkylenoxideinheiten können statistisch oder blockweise angeordnet werden, und die Polyalkylenoxidgruppe kann H oder eine C₁- bis C₄-Gruppe als terminale Gruppe aufweisen. Die Beispiele nennen konkret Polyethylenoxid-b-polypropylenoxidmonobutylvinylether.

JP 2001-199751 A offenbart die Herstellung eines Dispergiermittels für Zement. Hierbei wird Maleinsäureanhydrid mit einem Makromonomer copolymerisiert. Bei dem Makromonomer handelt es sich um ein Polyoxyalkylen-Blockcopolymer aus einem Polyethylenoxid-Block und einem Block aus einem Alkylenoxid ausgewählt aus der Gruppe von Propylenoxid, Butylenoxid oder Styroloxid, wobei die terminalen OH-Gruppen mit einer C₂- bis C₅-Alkenylgruppe bzw. mit einer C₁- bis C₅-Alkylgruppe verethert sind.

JP 2000-119699 A offenbart ein Hilfsmittel zum Deinking bei der Wiederaufarbeitung von Altpapier. Hierzu wird ein Polyoxyalkylen-Blockcopolymer eingesetzt, welches eine terminale C₈- bis C₂₄-Alkyl- bzw. Alkenylgruppe aufweist, die mit einem Ethylenoxid-Propylenoxid-Block, einem Polyethylenoxidblock sowie einem Block aus Propylenoxid oder höheren Alkylenoxiden verbunden ist. Die Herstellung von Polymeren ausgehend von diesem Blockcopolymer wird nicht beschrieben.

DE 39 25 220 C1 offenbart durch Emulsionspolymerisation erhältliche Copolymerisate, welche aus Verdickungsmittel verwendet werden können. Die Copolymere enthalten neben (Meth) acrylsäure und weiteren nichtionischen Vinylmonomeren Alkoxygruppen aufweisenden Makromonomere auf Basis von Alkylethern.

EP 1 069 139 A2 offenbart die Herstellung von wässrigen Dispersionen durch Polymerisation von wasserunlöslichen, olefinisch ungesättigten Monomeren in Gegenwart von wasserlöslichen, alkoxylierten Allyl- oder Vinylethern. Letztere Monomere dienen als Emulgatoren und Schutzkolloide zur Herstellung von wässrigen Dispersionen aus den wasserunlöslichen Monomeren.

Es ist bekannt, hydrophob assoziierende Copolymere im Bereich der Erdölförderung, insbesondere zur tertiären Erdölförderung (Enhanced Oil Recovery, EOR) einzusetzen. Einzelheiten zur Verwendung hydrophob assoziierender Copolymere zur tertiären Erdölförderung sind beispielsweise im Übersichtsartikel von Taylor, K.C. und Nasr-El-Din, H.A. in J. Petr. Sci. Eng. 1998, 19, 265-280 beschrieben.

Zu den Techniken der tertiären Erdölförderung gehört das so genannte "Polymerfluten". Eine Erdöllagerstätte ist kein unterirdischer "Erdölsee", sondern das Erdöl ist in winzigen Poren des erdölführenden Gesteins festgehalten. Der Durchmesser der Hohlräume in der Formation beträgt üblicherweise nur wenige Mikrometer. Zum Polymerfluten presst man durch Injektionsbohrungen eine wässrige Lösung eines verdickend wirkenden Polymers in eine Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird über die Produktionsbohrung gefördert. Wichtig für diese Anwendung ist es, dass die wässrige Polymerlösung keinerlei Gelpartikel enthält. Bereits kleine Gelpartikel mit Dimensionen im Mikrometerbereich können die feinen Poren in der Formation verstopfen und somit die Erdölförderung zum Erliegen bringen. Hydrophob assoziierende Copolymere zur tertiären Erdölförderung sollten daher einen möglichst geringen Anteil an Gelpartikeln aufweisen.

Die oben genannten Monomere H₂C=C(R^{x})-COO-(-CH₂-CH₂-O-)_{q}-R^{y} und H₂C=C(R^{x})-O-(-CH₂-CH₂-O-)_{q}-R^{y} werden üblicherweise mittels eines zweistufigen Verfahrens hergestellt. In einer ersten Stufe wird ein Alkohol R-OH ethoxyliert, wobei ein ethoxylierter Alkohol der allgemeinen Formel HO-(-CH₂-CH₂-O-)_{q}-R^{y} erhalten wird.

Dieser kann in einer zweiten Stufe mit (Meth)acrylsäureanhydrid oder Acetylen zu den genannten Monomeren umgesetzt werden. Als Nebenprodukt der ersten Stufe (d.h. der Ethoxylierung des Alkohols) entsteht in geringen Mengen Polyethylenoxid HO-(-CH₂-CH₂-O)_{q}-H. In der zweiten Stufe können hieraus die difunktionellen Moleküle H₂C=C(R^{x})-COO-(-CH₂-CH₂-O-)_{q}-OC-C(R^{x})=CH₂ bzw. H₂C=C(R^{x})-O-(-CH₂-CH₂-O-)_{q}-C(R^{x})=CH₂ gebildet werden. Da eine Aufreinigung überaus aufwändig ist, werden diese Nebenprodukte üblicherweise nicht abgetrennt. Derartige difunktionelle Moleküle wirken vemetzend führen daher im Zuge einer Polymerisation zur Bildung vernetzter Produkte. Hierdurch weisen die gebildeten Polymere zwangsläufig gewisse Gelanteile auf, die bei der Verwendung der Polymere für EOR äußerst störend sind. Weiterhin ist es aus wirtschaftlichen Gründen ohnehin wünschenswert, ein möglichst einfaches Verfahren zur Herstellung der Monomere bereit zu stellen.

Aufgabe der Erfindung war es daher, hydrophob assoziierende Copolymere mit geringen Gelanteilen bereitzustellen. Außerdem sollten die Copolymere wirtschaftlicher als bisher hergestellt werden können.

Dementsprechend wurden wasserlösliche, hydrophob assoziierende Copolymere gefunden, welche mindestens die folgenden Monomere umfassen:
(a) 0,1 bis 20 Gew.-% mindestens eines monoethylenisch ungesättigten, hydrophob assoziierenden Monomers (a), sowie
(b) 25 Gew.-% bis 99,9 Gew.-% mindestens eines davon verschiedenen, monoethylenisch ungesättigten, hydrophilen Monomers (b),
wobei die Mengenangaben jeweils auf die Gesamtmenge aller Monomere im Copolymer bezogen sind und wobei es sich bei mindestens einem der Monomere (a) um ein Monomer der allgemeinen Formel (I)

H₂C=C(R¹)-R⁴-O-(-CH₂-CH(R²)-O-)ₖ-(-CH₂-CH(R³)-O-)ₗ-R⁵ (I)

handelt, wobei die Einheiten -(-CH₂-CH(R²)-O-)ₖ und -(-CH₂-CH(R³)-O-)ₗ in Blockstruktur in der in Formel (I) dargestellten Reihenfolge angeordnet sind und die Reste und Indices die folgende Bedeutung haben:
k: eine Zahl von 10 bis 150,
l: eine Zahl von 5 bis 25,
R¹: H oder Methyl,
R²: unabhängig voneinander H, Methyl oder Ethyl, mit der Maßgabe, dass es sich bei mindestens 50 mol % der Reste R² um H handelt,
R³: unabhängig voneinander ein Kohlenwasserstoffrest mit mindestens 2 Kohlenstoffatomen oder eine Ethergruppe der allgemeinen Formel - CH₂-O-R^{3'}, wobei R^{3'} für einen Kohlenwasserstoffrest mit mindestens 2 Kohlenstoffatomen steht,
R⁴: eine Einfachbindung oder eine zweiwertige, verknüpfende Gruppe, ausgewählt aus der Gruppe von -O-(C_{n'}H_{2n'})- [R^{4b}], wobei n' jeweils für eine natürliche Zahl von 1 bis 6 steht,
R⁵: H oder ein Kohlenwasserstoffrest mit 1 bis 30 C-Atomen.

Weiterhin wurde die Verwendung derartiger Copolymere zur Erschließung, Ausbeutung und Komplettierung unterirdischer Erdöl- und Erdgaslagerstätten, als Additiv für wässrige Baustoffsysteme, die hydraulische Bindemittelsysteme enthalten und zur Herstellung von flüssigen Wasch- und Reinigungsmitteln gefunden, sowie für die jeweilige Verwendung bevorzugte Zusammensetzungen der Copolymere.

Zu der Erfindung ist im Einzelnen das Folgende auszuführen:

Bei den erfindungsgemäßen hydrophob assoziierenden Copolymeren handelt es sich um wasserlösliche Copolymere, welche hydrophobe Gruppen aufweisen. In wässriger Lösung können die hydrophoben Gruppen mit sich selbst oder mit anderen hydrophobe Gruppen aufweisenden Stoffen assoziieren und verdicken durch diese Wechselwirkung das wässrige Medium.

Dem Fachmann ist bekannt, dass die Löslichkeit hydrophob assoziierender (Co)polymere in Wasser je nach der Art der verwendeten Monomere mehr oder weniger stark vom pH-Wert abhängig sein kann. Bezugspunkt für die Beurteilung der Wasserlöslichkeit soll daher jeweils der für den jeweiligen Einsatzzweck des Copolymers gewünschte pH-Wert sein. Ein Copolymer, welches bei einem bestimmten pH-Wert eine nicht ausreichende Löslichkeit für den vorgesehenen Einsatzzweck hat, kann bei einem anderen pH-Wert eine ausreichende Löslichkeit aufweisen. Der Begriff "wasserlöslich" umfasst insbesondere auch alkalilösliche Dispersionen von Polymeren, d.h. Polymere, welche im sauren pH-Bereich als Dispersionen vorliegen und sich erst im alkalischen pH-Bereich in Wasser lösen und ihre verdickende Wirkung entfalten.

Im Idealfalle sollten die erfindungsgemäßen Copolymere in beliebigem Verhältnis mit Wasser mischbar sein. Erfindungsgemäß ist es aber ausreichend, wenn die Copolymere zumindest bei der gewünschten Einsatzkonzentration und beim gewünschten pH wasserlöslich sind. Im Regelfalle sollte die Löslichkeit in Wasser bei Raumtemperatur mindestens 20 g/l, bevorzugt mindestens 50 g/l und besonders bevorzugt mindestens 100 g/l betragen.

Die erfindungsgemäßen, hydrophob assoziierenden Copolymere umfassen neben den bereits erwähnten hydrophoben Gruppen daher hydrophile Gruppen in einer solchen Menge, dass die geschilderte Wasserlöslichkeit zumindest im für die jeweilige Anwendung vorgesehenen pH-Bereiche gewährleistet ist.

### Monomer (a)

Das erfindungsgemäße, hydrophob assoziierende Copolymer umfasst mindestens ein monoethylenisch ungesättigtes Monomer (a), welches dem erfindungsgemäßen Copolymer hydrophob assoziierende Eigenschaften verleiht und daher im Folgenden als hydrophob assoziierendes Monomer bezeichnet wird.

### Monomer (a) der Formel (I)

Erfindungsgemäß handelt es sich bei mindestens einem der monoethylenisch ungesättigten Monomere (a) um ein Monomer der allgemeinen Formel

H₂C=C(R¹)-R⁴-O-(-CH₂-CH(R²)-O-)ₖ-(-CH₂-CH(R³)-O-)ₗ-R⁵ (I).

Bei den Monomeren (a) der Formel (I) ist eine ethylenische Gruppe H₂C=C(R¹)- über eine zweiwertige, verknüpfende Gruppe -R⁴-O- mit einem Polyoxyalkylenrest mit Blockstruktur -(-CH₂-CH(R²)-O-)ₖ-(-CH₂-CH(R³)-O-)ₗ-R⁵ verbunden, wobei die beiden Blöcke -(-CH₂-CH(R²)-O-)ₖ und -(-CH₂-CH(R³)-O-)ₗ in der in Formel (I) dargestellten Reihenfolge angeordnet sind. Der Polyoxyalkylenrest weist entweder eine terminale OH-Gruppe oder eine terminale Ethergruppe -OR⁵ auf.

In der oben genannten Formel steht R¹ für H oder eine Methylgruppe.

R⁴ steht für eine zweiwertige, verknüpfende Gruppe, -O-(C_{n'}H_{2n'})- [Gruppe R^{4b}]-. In den genannten Formeln steht n' für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche über eine Ethergruppe -O- mit der ethylenischen Gruppe H₂C=C(R¹)- verknüpft sind. Bevorzugt handelt es sich bei den Gruppen - (C_{n'}H_{2n'})- um lineare aliphatische Kohlenwasserstoffgruppen.

Bevorzugt handelt es sich bei der Gruppe R^{4b} um eine Gruppe ausgewählt aus -O-CH₂-CH₂-, -O-CH₂-CH₂-CH₂- und -O-CH₂-CH₂-CH₂-CH₂-, besonders bevorzugt ist -O-CH₂-CH₂-CH₂-CH₂-.

Weiterhin besonders bevorzugt handelt es sich bei R⁴ um eine Gruppe ausgewählt aus -O-CH₂-CH₂-CH₂-CH₂-.

Die Monomere (I) weisen weiterhin einen Polyoxyalkylenrest auf, der aus den Einheiten -(-CH₂-CH(R²)-O-)ₖ und -(-CH₂-CH(R³)-O-)ₗ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Im Block -(-CH₂-CH(R²)-O-)ₖ stehen die Reste R² unabhängig voneinander für H, Methyl oder Ethyl, bevorzugt H oder Methyl mit der Maßgabe, dass es sich bei mindestens 50 mol % der Reste R² um H handelt. Bevorzugt handelt es sich bei mindestens 75 mol % der Reste R² um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

Bei der Anzahl der Alkylenoxideinheiten k handelt es sich um eine Zahl von 10 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R³)-O-)ₗ- stehen die Reste R³ unabhängig voneinander für Kohlenwasserstoffstoffreste von mindestens 2 Kohlenstoffatomen steht, bevorzugt mindestens 3 und besonders bevorzugt 3 bis 10 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste R³ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei den Resten R³ kann es sich weiterhin um Ethergruppen der allgemeinen Formel-CH₂-O-R^{3'} handeln, wobei es sich bei R^{3'} um einen aliphatischen und/oder aromatischen, linearen oder verzweigten Kohlenwasserstoffrest mit mindestens 2 Kohlenstoffatomen, bevorzugt mindestens 3 und besonders bevorzugt 3 bis 10 Kohlenstoffatomen handelt. Beispiele für Reste R^{3'} umfassen n-Propyl, n-Butyl, n-Pentyl, n-Hexyl, 2-Ethylhexyl, n-Heptyl, n-Octyl, n-Nonyl n-Decyl oder Phenyl.

Bei dem Block -(-CH₂-CH(R³)-O-)ₗ- handelt es sich also um einen Block, der aus Alkylenoxideinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bevorzugt als Reste R³ sind die genannten Kohlenwasserstoffeste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei dem Rest R⁵ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei R⁵ um H, Methyl oder Ethyl, besonders bevorzugt um H oder Methyl und ganz besonders bevorzugt um H.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale -OR⁵-Guppe, insbesondere eine OH-Gruppe auf. Im Gegensatz zu den aus dem Stand der Technik bekannten hydrophob assoziierenden Copolymeren muss die Endgruppe nicht mit einem Kohlenwasserstoffrest zum hydrophoben Assoziieren verethert sein, sondern der terminale Block -(-CH₂-CH(R³)-O-)ₗ selbst mit den Resten R³ ist für das hydrophobe Assoziieren der unter Verwendung der Monomere (a) hergestellten Copolymere verantwortlich. Das Verethern ist nur eine Option, welche vom Fachmann je nach den gewünschten Eigenschaften des Copolymers ausgewählt werden kann.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block -(-CH₂-CH(R²)-O-)ₖ noch geringe Mengen an Einheiten -CH₂-CH(R³)-O- und der zweite Block -(-CH₂-CH(R³)-O-)ₗ-geringe Mengen an Einheiten -CH₂-CH(R²)-O- aufweisen, wobei diese Einheiten aber nicht statistisch über den Block verteilt sind, sondern in der genannten Übergangszone angeordnet sind.

### Herstellung der Monomere (a) der Formel (I)

Die Herstellung der hydrophob assoziierenden Monomere (a) der Formel (I) kann nach dem Fachmann prinzipiell bekannten Methoden erfolgen.

Zur Herstellung der Monomere (a) geht man in einem bevorzugten Herstellverfahren von geeigneten monoethylenisch ungesättigten Alkoholen (III) aus, welche anschließend in einem zweistufigen Prozess alkoxyliert werden, so dass die erwähnte Blockstruktur erhalten wird. Man erhält Monomere (a) der Formel (I) mit R⁵ = H. Diese können optional in einem weiteren Verfahrensschritt verethert werden.

Zur Herstellung der Monomere (a) mit verknüpfender Gruppe R^{4b} geht man von Vinylethern der Formel H₂C=C(R¹)-O-(C_{n'}H_{2n'})OH, bevorzugt H₂C=CH-O-(C_{n'}H_{2n'})-OH aus. Besonders bevorzugt kann ω-Hydroxybutylvinylether H₂C=CH-O-CH₂-CH₂-CH₂-CH₂-OH eingesetzt werden.

Die genannten Ausgangsverbindungen werden alkoxyliert, und zwar in einem zweistufigen Prozess zunächst mit Ethylenoxid, optional im Gemisch mit Proyplenoxid und/oder Butylenoxid und in einem zweiten Schritt mit Alkylenoxiden der allgemeinen Formeln (Xa) bzw. (Xb) 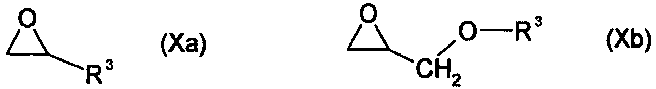 wobei R³ in (Xa) bzw. R^{3'} in (Xb) die eingangs definierte Bedeutung haben.

Die Durchführung einer Alkoxylierung einschließlich der Herstellung von Blockcopolymeren aus verschiedenen Alkylenoxiden ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate sowie die Orientierung von Alkylenoxideinheiten in einer Polyetherkette beeinflussen kann.

Die Alkoxylate können beispielsweise durch basenkatalysierte Alkoxylierung hergestellt werden. Dazu kann der als Ausgangsmaterial verwendete Alkohol in einem Druckreaktor mit Alkalihydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und ein einem ersten Schritt Ethylenoxid, optional im Gemisch mit Propylen- und/oder Butylenoxid bei Temperaturen von 60 bis 180°C, bevorzugt 130 bis 150°C schrittweise zugegeben. Die Zugabe erfolgt typischerweise innerhalb von 2 bis 5 h, ohne dass die Erfindung darauf beschränkt sein soll. Nach Beendigung der Zugabe lässt man das Reaktionsgemisch zweckmäßigerweise nachreagieren, beispielsweise für ½ h bis 1 h. In einem zweiten Schritt dosiert man anschließend die Alkylenoxide mit mindestens 5 Kohlenstoffatomen schrittweise zu. Die Reaktionstemperatur in der zweiten Stufe kann beibehalten werden oder auch verändert werden. Bewährt hat sich eine um ca. 10 bis 25°C niedrigere Reaktionstemperatur als in der ersten Stufe.

Die Alkoxylierung kann auch mittels Techniken vorgenommen werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der als Ausgangsmaterial verwendete Alkohol mit dem Katalysator versetzt werden, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Alkoxylierung kann weiterhin auch säurekatalysiert vorgenommen werden. Bei den Säuren kann es sich um Brönstedt- oder Lewissäuren handeln. Zur Durchführung der Reaktion kann der als Ausgangsmaterial verwendete Alkohol mit dem Katalysator versetzt, die Mischung wie oben beschrieben entwässert werden und mit den Alkylenoxiden wie beschrieben umgesetzt werden. Am Ende der Reaktion kann der saure Katalysator durch Zugabe einer Base, beispielsweise KOH oder NaOH neutralisiert und bei Bedarf abfiltriert werden.

Für den Fachmann auf dem Gebiet der Polyalkylenoxide ist klar, dass die Orientierung der Kohlenwasserstoffeste R³ sowie gegebenenfalls R² von den Bedingungen bei der Alkoxylierung abhängen kann, beispielsweise vom zur Alkoxylierung gewählten Katalysator. Die Alkylenoxidgruppen können also sowohl in der Orientierung -(-CH₂-CH(R³)-O-) oder auch in inverser Orientierung -(-CH(R³)-CH₂-O-)- in das Monomer eingebaut werden. Die Darstellung in Formel (I) soll daher nicht als auf eine bestimmte Orientierung der Gruppen R² bzw. R³ beschränkt angesehen werden.

Sofern die wie beschrieben erhaltenen Monomere (a) der Formel (I) mit einer terminalen OH-Gruppe (d.h. R⁵ = H) optional verethert werden sollen, kann dies mit dem Fachmann prinzipiell bekannten, üblichen Alkylierungsmitteln erfolgen, beispielsweise Alkylsulfaten. Zur Veretherung kann insbesondere Dimethylsulfat oder Diethylsulfat eingesetzt werden.

Das beschriebene bevorzugte Herstellverfahren für die Monomere (I) unterscheidet sich auch für den Fall, dass R⁵ nicht H ist, grundlegend von der Synthese bekannter hydrophob assoziierender Monomere durch die Reihenfolge der Syntheseschritte: Während man bei den Syntheseverfahren zur Synthese der bekannten, eingangs erwähnten hydrophob assoziierenden Monomere von einem Alkohol ausgeht, diesen alkoxyliert und erst zum Schluss eine Verbindung mit ethylenisch ungesättigter Gruppe mit dem alkoxylierten Alkohol umsetzt, geht man bei der erfindungsgemäß beschriebenen Synthesevariante umgekehrt vor: Ausgangsmaterial ist eine ethylenisch ungesättigte Verbindung, welche alkoxyliert wird und anschließend optional verethert werden kann. Hierdurch wird die Bildung vernetzend wirkender Nebenprodukte vermieden, so dass die Herstellung von Copolymeren mit besonders niedrigem Gelanteil möglich ist.

### Weitere Monomere (a)

Neben den Monomeren (I) können optional noch von den Monomeren (I) verschiedene monoethylenische, hydrophob assoziierende Monomere (a) eingesetzt werden. Weitere Monomere (a) weisen die allgemeine Formel H₂C=C(R¹)-Y-Z auf, wobei R¹ für H oder Methyl, Z für eine terminale hydrophobe Gruppe und Y für eine verknüpfende hydrophile Gruppe steht. Dem Fachmann sind derartige Monomere bekannt, und er trifft gegebenenfalls eine geeignete Auswahl. Beispiele derartiger Monomere umfassen insbesondere Monomere der allgemeinen Formel H₂C=C(R¹)-COO-(-CH₂-CH(R⁶)-O-)_{q}-R⁷ (IIa) oder H₂C=C(R¹)-O-(-CH₂-CH(R⁶)-O-)_{q}-R⁷ (IIb) wobei q für eine Zahl von 10 bis 150, bevorzugt 12 bis 100, besonders bevorzugt 15 bis 80, ganz besonders bevorzugt 20 bis 30 und beispielsweise ca. 25 steht, R¹ wie oben definiert ist und die Reste R⁶ unabhängig voneinander für H, Methyl oder Ethyl, bevorzugt H oder Methyl mit der Maßgabe, dass es sich bei mindestens 50 mol % der Reste R⁶ um H handelt. Bevorzugt handelt es sich bei mindestens 75 mol % der Reste R⁶ um H, besonders bevorzugt bei mindestens 90 mol % und ganz besonders bevorzugt ausschließlich um H. Bei dem Rest R⁷ handelt es sich um einen aliphatischen und/oder aromatischen, geradkettigen oder verzweigten Kohlenwasserstoffrest mit mindestens 6 Kohlenstoffatomen, insbesondere 6 bis 40 Kohlenstoffatomen, bevorzugt 8 bis 30 Kohlenstoffatomen. Beispiele umfassen n-Alkylgruppen wie n-Octyl-, n-Decyl- oder n-Dodecylgruppen, Phenylgruppen sowie insbesondere substituierte Phenylgruppen. Bei den Substituenten an den Phenylgruppen kann es sich um Alkylgruppen, beispielsweise C₁- bis C₆-Alkylgruppen handeln, bevorzugt um Styrylgruppen. Besonders bevorzugt ist eine Tristyrylphenylgruppe. Die genannten hydrophob assoziierenden Monomere der Formeln (IIa) bzw. (IIb) sind dem Fachmann prinzipiell bekannt.

### Mengen der Monomere (a)

Die Menge der monoethylenisch ungesättigten, hydrophob assoziierenden Monomere (a) richtet sich nach dem jeweiligen Verwendungszweck des erfindungsgemäßen Copolymers und beträgt im Allgemeinen 0,1 bis 20 Gew.-% bezogen auf die Gesamtmenge aller Monomere im Copolymer, bevorzugt 0,1 bis 12 Gew.-%. In einer weiteren bevorzugten Ausführungsform beträgt die Menge 0,5 bis 20 Gew.-%, besonders bevorzugt 0,5 bis 12 Gew.-%.

Sofern neben den Monomeren (a) der Formel (I) noch weitere Monomere (a) eingesetzt werden, sollten die Monomere der Formel (I) im Regelfalle in einer Menge von mindestens 0,1 Gew.-% bezüglich der Summe aller Monomere im Copolymer eingesetzt werden, bevorzugt mindestens 0,5 Gew.-%. Weiterhin sollte der Anteil der Monomere der Formel (I) in der Regel zumindest 25 Gew.-% bezüglich der Menge aller Monomere (a) betragen, bevorzugt mindestens 50 Gew.-%, besonders bevorzugt mindestens 75 Gew.-% und besonders bevorzugt sollten als Monomere (a) nur Monomere der Formel (I) eingesetzt werden.

### Hydrophile Monomere (b)

Über die Monomere (a) hinaus umfasst das erfindungsgemäße, hydrophob assoziierende Copolymer mindestens ein davon verschiedenes, monoethylenisch ungesättigtes, hydrophiles Monomer (b). Selbstverständlich können auch Gemische mehrerer verschiedener hydrophiler Monomere (b) eingesetzt werden.

Die hydrophilen Monomere (b) umfassen neben einer ethylenischen Gruppe eine oder mehrere hydrophile Gruppen. Diese verleihen dem erfindungsgemäßen Copolymer aufgrund ihrer Hydrophilie eine ausreichende Wasserlöslichkeit. Bei den hydrophilen Gruppen handelt es sich insbesondere um funktionelle Gruppen, welche O- und/oder N-Atome umfassen. Sie können darüber hinaus als Heteroatome insbesondere S- und/oder P-Atome umfassen.

Besonders bevorzugt sind die Monomere (b) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (b) in Wasser bei Raumtemperatur mindestens 100 g/l, bevorzugt mindestens 200 g/l und besonders bevorzugt mindestens 500 g/l betragen.

Beispiele geeigneter funktioneller Gruppen umfassen Carbonylgruppen >C=O, Ethergruppen -O-, insbesondere Polyethylenoxidgruppen -(CH₂-CH₂-O-)ₙ-, wobei n bevorzugt für eine Zahl von 1 bis 200 steht, Hydroxygruppen -OH, Estergruppen - C(O)O-, primäre, sekundäre oder tertiäre Aminogruppen, Ammoniumgruppen, Amidgruppen -C(O)-NH-, Carboxamidgruppen -C(O)-NH₂ oder saure Gruppen wie Carboxylgruppen -COOH, Sulfonsäuregruppen -SO₃H, Phosphonsäuregruppen - PO₃H₂ oder Phosphorsäuregruppen -OP(OH)₃.

Beispiele bevorzugter funktioneller Gruppen umfassen Hydroxygruppen -OH, Carboxylgruppen -COOH, Sulfonsäuregruppen -SO₃H, Carboxamidgruppen -C(O)-NH₂, Amidgruppen -C(O)-NH- sowie Polyethylenoxidgruppen -(CH₂-CH₂-O-)ₙ-H, wobei n bevorzugt für eine Zahl von 1 bis 200 steht.

Die funktionellen Gruppen können direkt an die ethylenische Gruppe angebunden sein, oder aber über eine oder mehrere verknüpfende Kohlenwasserstoffgruppen mit der ethylenischen Gruppe verbunden sein.

Bei den hydrophilen Monomeren (b) handelt es sich bevorzugt um Monomere der allgemeinen Formel H₂C=C(R⁸)R⁹(III), wobei R⁸ für H oder Methyl und R⁹ für eine hydrophile Gruppe oder eine, eine oder mehrere hydrophile Gruppen umfassende Gruppe steht.

Bei den Gruppen R⁹ handelt es sich um Gruppen, welche Heteroatome in einer solchen Menge umfassen, so dass die eingangs definierte Wasserlöslichkeit erreicht wird.

Beispiele geeigneter Monomere (b) umfassen saure Gruppen umfassende Monomere, beispielsweise -COOH-Gruppen umfassende Monomere wie Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Phosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Zu nennen sind weiterhin Acrylamid und Methacrylamid sowie Derivate davon, wie beispielsweise N-Methyl(meth)acrylamid, N, N'-Dimethyl(meth)acrylamid sowie N-Methylolacrylamid, N-Vinylderivate wie N-Vinylformamid, N-Vinylacetamid, N-Vinylpyrrolidon oder N-Vinylcaprolactam sowie Vinylester, wie Vinylformiat oder Vinylacetat. N-Vinylderivate können nach Polymerisation zu Vinylamin-Einheiten, Vinylester zu Vinylalkohol-Einheiten hydrolysiert werden.

Weitere Beispiele umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹)-COO-(-CH₂-CH(R¹⁰)-O-)_{b}-R¹¹ (IVa) bzw. H₂C=C(R¹)-O-(-CH₂-CH(R¹⁰)-O-)_{b}-R¹¹ (IVb) wobei R¹ wie oben definiert ist und b für eine Zahl von 2 bis 200, bevorzugt 2 bis 100 steht. Bei den Resten R⁹ handelt es sich unabhängig voneinander um H, Methyl oder Ethyl, bevorzugt H oder Methyl, mit der Maßgabe, dass es sich bei mindestens 50 mol % der Reste R⁹ um H handelt. Bevorzugt handelt es sich bei mindestens 75 mol % der Reste R⁹ um H, besonders bevorzugt bei mindestens 90 mol % und ganz besonders bevorzugt ausschließlich um H. Bei dem Rest R¹¹ handelt es sich um H, Methyl oder Ethyl, bevorzugt H oder Methyl. Die einzelnen Alkylenoxideinheiten können statistisch oder blockweise angeordnet werden. Bei einem Blockcopolymer kann der Übergang zwischen den Blöcken abrupt oder graduell sein.

Geeignete hydrophile Monomere (b) sind weiterhin Ammoniumgruppen aufweisende Monomere, insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (b) um Verbindungen der allgemeinen Formeln H₂C=C(R⁸)-CO-NR¹⁴-R¹²-NR¹³₃⁺ X- (Va) und/oder H₂C=C(R⁸)-COO-R¹²-NR¹³₃⁺ X- (Vb) handeln, wobei R⁸ die oben angegebene Bedeutung hat, also für H oder Methyl steht, R¹² für eine bevorzugt lineare C₁- bis C₄-Alkylengruppe steht und R¹⁴ für H oder eine C₁- bis C₄-Alkylgruppe, bevorzugt H oder Methyl. Bei den Resten R¹³ handelt es sich unabhängig voneinander um C₁- bis C₄-Alkyl, bevorzugt Methyl oder eine Gruppe der allgemeinen Formel -R¹⁵-SO₃H, wobei R¹⁵ für eine bevorzugt lineare C₁- bis C₄-Alkylengruppe oder eine Phenylgruppe steht, mit der Maßgabe, dass es sich im Regelfalle bei nicht mehr als einem der Substituenten R¹³ um einen Sulfonsäuregruppen aufweisenden Substituenten handelt. Besonders bevorzugt handelt es sich bei den drei Substituenten R¹³ um Methylgruppen, d.h. das Monomer weist eine Gruppe -N(CH₃)₃⁺ auf. X- steht in obiger Formel für ein einwertiges Anion, beispielsweise Cl⁻. Selbstverständlich kann X⁻auch für einen entsprechenden Bruchteil eines mehrwertigen Anions stehen, obwohl dies nicht bevorzugt ist. Beispiele geeigneter Monomere (b) der allgemeinen Formel (Va) bzw. (Vb) umfassen Salze von 3-Trimethylammonium-propylacrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Die oben genannten hydrophilen Monomere können selbstverständlich nicht nur in der dargestellten Säure- bzw. Baseform eingesetzt werden, sondern auch in Form entsprechender Salze. Es ist auch möglich, saure oder basische Gruppen nach der Bildung des Polymers in entsprechende Salze umzuwandeln.

In einer bevorzugten Ausführungsform der Erfindung umfasst das erfindungsgemäße Copolymer mindestens ein saure Gruppen umfassendes Monomer (b). Bevorzugt handelt es sich hierbei um Monomere, welche mindestens eine Gruppe ausgewählt aus der Gruppe von -COOH, -SO₃H oder -PO₃H₂ umfassen, besonders bevorzugt sind COOH-Gruppen und/oder -SO₃H-Gruppen umfassende Monomere, wobei die sauren Gruppen auch ganz oder teilweise in Form der entsprechenden Salze vorliegen können.

Bevorzugt handelt es sich bei mindestens einem der Monomere (b) um ein Monomer ausgewählt aus der Gruppe von (Meth)acrylsäure, Vinylsulfonsäure, Allylsulfonsäure oder 2-Acrylamido-2-methylpropansulfonsäure (AMPS), besonders bevorzugt um Acrylsäure und/oder APMS bzw. deren Salze.

Die Menge der Monomere (b) im erfindungsgemäßen Copolymer beträgt 25 bis 99,9 Gew.-% bezogen auf die Gesamtmenge aller Monomere im Copolymer, bevorzugt 25 bis 99,5 Gew.-%. Die genaue Menge richtet sich nach der Art und dem gewünschten Verwendungszweck der hydrophob assoziierenden Copolymere und wird vom Fachmann entsprechend festgelegt.

### Monomere (c)

Über die hydrophilen Monomere hinaus können die erfindungsgemäßen Copolymere optional von den Monomeren (a) und (b) verschiedene monoethylenisch ungesättigte Monomere (c) umfassen. Selbstverständlich können auch Gemische mehrerer verschiedener Monomere (c) eingesetzt werden.

Bei den Monomeren (c) handelt es sich insbesondere um Monomere, welche im Wesentlichen hydrophoben Charakter haben und nur in geringem Maße wasserlöslich sind. Im Regelfalle beträgt die Löslichkeit der Monomere (c) in Wasser bei Raumtemperatur weniger als 100 g/l, bevorzugt weniger als 50 g/l und besonders bevorzugt weniger als 20 g/l.

Beispiele für derartige Monomere (c) umfassen Kohlenwasserstoffe, insbesondere Styrol sowie hydrophobe Derivate wie beispielsweise α-Methylstyrol oder Alkylstyrole wie 4-Methylstyrol oder 4-Ethylstyrol.

Bevorzugt handelt es sich bei den weiteren Monomeren um solche der allgemeinen Formel H₂C=C(R¹⁶)R¹⁷ (VI), wobei R¹⁶ für H oder Methyl und R¹⁷ für eine weitere Gruppe steht, welche im Wesentlichen hydrophoben Charakter aufweist.

Bei R¹⁷ handelt es sich bevorzugt um Carbonsäureestergruppen -COOR¹⁸, wobei es sich bei R¹⁸ um einen geradkettigen oder verzweigten, aliphatischen, cycloaliphatischen und/oder aromatischen Kohlenwasserstoffrest mit 1 bis 30 Kohlenstoffatomen, bevorzugt 2 bis 12 Kohlenstoffatomen handelt. Besonders bevorzugt handelt es sich um einen aliphatischen, geradkettigen oder verzweigten Kohlenwasserstoffrest mit 2 bis 10 Kohlenstoffatomen.

Beispiele derartiger Monomere (c) umfassen Ester der (Meth)acrylsäure, beispielsweise Alkyl(meth)acrylate, wie Methyl(meth)acrylat, Ethyl(meth)acrylat, n-Propyl(meth)acrylat, n-Butyl(meth)acrylat, 2-Ethylhexylacrylat oder 2-Propylheptylacrylat.

Bei R¹⁶ kann es sich weiterhin um Carbonsäureamidgruppen -CONHR¹⁷ bzw.-CON(R¹⁷)₂ handeln, mit der Maßgabe, dass die Anzahl der Kohlenstoffatome im Rest R¹⁸ bzw. beiden Resten R¹⁸ zusammen mindestens 3, bevorzugt mindestens 4 beträgt, wobei die beiden Reste R¹⁸ zusammen auch einen Ring bilden können. Beispiele derartiger Monomere umfassen N-Butyl(meth)acrylamid, N-Cyclohexyl(meth)acrylamid oder N-Benzyl(meth)acrylamid.

Zu den Monomeren (c) zählen auch solche Monomere, die zwar hydrophile Gruppen neben hydrophoben Gruppen aufweisen, aber bei denen die hydrophoben Molekülteile dominieren, so dass die Monomere nicht mehr die erforderliche Löslichkeit in Wasser aufweisen und somit alleine dem Polymer auch nicht die erforderliche Löslichkeit verleihen können.

Die Art und Menge weiterer Monomere (c) richtet sich nach den gewünschten Eigenschaften und dem Verwendungszweck des Copolymers und beträgt 0 bis 74,9 Gew.-% bezogen auf die Gesamtmenge aller Monomere im Copolymer, bevorzugt 0 bis 74,5 Gew.-%.

### Monomere (d)

Die erfindungsgemäßen Copolymere können in Spezialfällen neben den Monomeren (a) und (b) sowie gegebenenfalls (c) optional auch Monomere (d) umfassen, welche über zwei oder mehrere, bevorzugt zwei ethylenisch ungesättigte Gruppen verfügen. Hierdurch kann eine gewisse Vernetzung des Copolymers erreicht werden, sofern das in der vorgesehenen Anwendung des Copolymers keine unerwünschten negativen Auswirkungen hat. Ein zu hoher Vernetzungsgrad sollte aber auf jeden Fall vermieden werden; insbesondere darf die geforderte Wasserlöslichkeit des Copolymers nicht beeinträchtigt werden. Ob eine leichte Vernetzung im Einzelfalle sinnvoll sein kann, richtet sich nach der jeweiligen Anwendung des Copolymers, und der Fachmann trifft eine entsprechende Auswahl.

Beispiele geeigneter Monomere (d) umfassen 1,4-Butandioldi(meth)acrylat, 1,6-Hexandioldi(meth)acrylat, 1 ,3-Butylenglykoldi(meth)acrylat , Neopentylglykoldi(meth)acrylat, Ethylenglykoldi(meth)acrylat , Diethylenglykoldi(meth)acrylat, Triethylenglykoldi(meth)acrylat oder Oligoethylenglykoldi(meth)acrylate wie bspw. Polyethylenglykol-bis(meth)acrylat, N,N'-Methylenbis(meth)acrylamid, Ethylenglykoldivinylether, Triethylenglykoldivinylether, Triallylamin, Triallylaminmethammoniumchlorid, Tetraallylammoniumchlorid oder Tris(2-hydroxy)isocyanurattri(meth)acrylat.

Sofern überhaupt vorhanden, werden vernetzend wirkende Monomere (d) aber nur in geringen Mengen eingesetzt. Im Regelfalle sollte die Menge der Monomere (d) 1 Gew.-% bezüglich der Menge alle eingesetzten Monomere nicht überschreiten. Bevorzugt sollten nicht mehr als 0,5 Gew.-% und besonders bevorzugt nicht mehr als 0,1 Gew.-% eingesetzt werden. Art und Menge des Vernetzers werden vom Fachmann je nach der gewünschten Anwendung des Copolymers festgelegt.

### Herstellung der hydrophob assoziierenden Copolymere

Die erfindungsgemäßen Copolymere können nach dem Fachmann prinzipiell bekannten Methoden durch radikalische Polymerisation der Monomere (a) und (b) sowie optional (c) und/oder (d) hergestellt werden, beispielsweise durch Substanz-, Lösungs-, Gel-, Emulsions-, Dispersions- oder Suspensionspolymerisation, bevorzugt in wässriger Phase.

Die Synthese der erfindungsgemäß verwendeten Monomere (a) der Formel (I) werden besonders bevorzugt nach dem oben dargestellten Herstellverfahren durch Alkoxylierung von Alkoholen (III) optional gefolgt von einer Veretherung bereitsgestellt.

In einer bevorzugten Ausführungsformen wird die Herstellung mittels Gelpolymerisation in wässriger Phase vorgenommen, vorausgesetzt alle eingesetzten Monomere weisen eine ausreichende Wasserlöslichkeit auf. Zur Gelpolymerisation wird zunächst eine Mischung aus den Monomeren, Initiatoren und sonstigen Hilfsstoffen mit Wasser oder einem wässrigen Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt mindestens 80 Gew.-% und besonders bevorzugt mindestens 90 Gew.-% beträgt. Zu nennen als organische Lösemittel sind hierbei insbesondere mit Wasser mischbare Alkohole wie Methanol, Ethanol oder Propanol. Saure Monomere können vor der Polymerisation ganz oder teilweise neutralisiert werden. Bevorzugt ist ein pH-Wert von ca. 4 bis ca. 9. Die Konzentration aller Komponenten mit Ausnahme der Lösemittel beträgt üblicherweise ca. 25 bis 60 Gew.-%, bevorzugt ca. 30 bis 50 Gew.-%.

Die Mischung wird anschließend fotochemisch und/oder thermisch polymerisiert, vorzugsweise bei -5 °C bis 50°C. Sofern thermisch polymerisiert wird, setzt man bevorzugt Polymerisationsinitiatoren ein, die schon bei vergleichsweise niedriger Temperatur starten, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10°C vorgenommen. Besonders vorteilhaft kann man fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10°C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichen. Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man eine Polymerisationsapparatur, welche ein Transportband zur Aufnahme der zu polymerisierenden Mischung verfügt. Das Transportband ist mit Einrichtungen zum Erwärmen oder zum Bestrahlen mit UV-Strahlung ausgestattet. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Das Gel wird nach der Polymerisation zerkleinert und getrocknet. Die Trocknung sollte bevorzugt bei Temperaturen unterhalb von 100°C erfolgen. Zum Vermeiden von Zusammenkleben kann man für diesen Schritt ein geeignetes Trennmittel verwenden. Man erhält das hydrophob assoziierende Copolymer als Pulver.

Weitere Einzelheiten zur Durchführung einer Gelpolymerisation sind beispielsweise in DE 10 2004 032 304 A1, Abschnitte [0037] bis [0041] offenbart.

Erfindungsgemäße Copolymere in Form von alkalilöslichen, wässrigen Dispersionen können bevorzugt mittels Emulsionspolymerisation hergestellt werden. Die Durchführung einer Emulsionspolymerisation unter Verwendung hydrophob assoziierender Monomere ist beispielsweise von WO 2009/019225 Seite 5, Zeile 16 bis Seite 8, Zeile 13 offenbart.

Die erfindungsgemäßen Copolymere besitzen vorzugsweise ein zahlenmittleres Molekulargewicht Mₙ von 50.000 bis 20.000.000 g/mol.

### Verwendung der hydrophob assoziierenden Copolymere

Die erfindungsgemäßen, hydrophob assoziierenden Copolymere können zur Verdickung wässriger Phasen eingesetzt werden.

Durch die Auswahl von Art und Menge der Monomere (a) und (b) sowie ggf. (c) und/oder (d) lassen sich die Eigenschaften der Copolymere an die jeweiligen technischen Anforderungen anpassen.

Die Einsatzkonzentration wird vom Fachmann je nach der Art der zu verdickenden wässrigen Phase sowie der Art des Copolymers festgelegt. Im Regelfalle beträgt die Konzentration des Copolymers 0,1 bis 5 Gew.-% bezüglich der wässrigen Phase, bevorzugt 0,5 bis 3 Gew.-% und besonders bevorzugt 1 bis 2 Gew.-%.

Die Copolymere können hierbei alleine eingesetzt werden, oder auch in Kombination mit anderen verdickenden Komponenten, beispielsweise anderen verdickenden Polymeren zusammen. Sie können weiterhin beispielsweise gemeinsam mit Tensiden zu einem verdickenden System formuliert werden. Die Tenside können in wässriger Lösung Mizellen bilden und die hydrophob assoziierenden Copolymere können gemeinsam mit den Mizellen ein dreidimensionales, verdickend wirkendes Netzwerk bilden.

Zum Einsatz kann man das Copolymer direkt in der zu verdickenden wässrigen Phase lösen. Denkbar ist es auch, das Copolymer vorzulösen und dann die gebildete Lösung dem zu verdickenden System zuzugeben.

Bei den zu verdickenden wässrigen Phasen kann es sich beispielsweise um flüssige Wasch- und Reinigungsmittelformulierungen, wie beispielsweise Waschmittel, Waschhilfsmittel wie beispielsweise pre-spotter, Weichspüler, kosmetische Formulierungen, pharmazeutische Formulierungen, Nahrungsmittel, Streichmassen, Formulierungen für die Textilherstellung, Textildruckpasten, Druckfarben, Druckpasten für den Textildruck, Anstrichfarben, Pigmentslurries, wässrige Formulierungen zur Schaumerzeugung, enteisende Mischungen, beispielsweise für Flugzeuge, Formulierungen für die Bauindustrie, wie beispielsweise als Additiv für wässrige Baustoffsysteme auf Basis hydraulischer Bindemittel wie Zement, Kalk, Gips und Anhydrit sowie in wasserbasierenden Anstrich- und Beschichtungssystemen, Formulierungen für die Erdölförderung, wie beispielsweise Bohrspülungen, Formulierungen zum Acidizing oder Fracturing oder Formulierungen für die tertiäre Erdölförderung handeln.

### Bevorzugte Verwendung und hierfür bevorzugtes Copolymer (A1)

In einer bevorzugten Ausführungsform der Erfindung können die erfindungsgemäßen, hydrophob assoziierenden Copolymere zur Erschließung, Ausbeutung und Komplettierung unterirdischer Erdöl- und Erdgaslagerstätten verwendet werden.

Die erfindungsgemäßen Copolymere können beispielsweise als Zusatz zu Bohrflüssigkeiten oder bei der Bohrlochzementierung sowie insbesondere zum Fracturing verwendet werden.

Besonders bevorzugt werden die Copolymere zur tertiären Ölförderung eingesetzt, und zwar zum sogenannten "Polymerfluten". Hierzu wird eine wässrige Formulierung eingesetzt, welche neben Wasser mindestens ein hydrophob assoziierendes Copolymer umfasst. Selbstverständlich können auch Gemische verschiedener Copolymere eingesetzt werden. Darüber hinaus können selbstverständlich noch weitere Komponenten eingesetzt werden. Beispiele weiterer Komponenten umfassen Biozide, Stabilisatoren oder Inhibitoren. Die Formulierung kann bevorzugt hergestellt werden, indem man das Wasser vorlegt und das Copolymer als Pulver einstreut. Die wässrige Formulierung sollte möglichst geringen Scherkräften ausgesetzt werden.

Die Konzentration des Copolymers sollte in der Regel 5 Gew.-% bezüglich der Summe aller Bestandteile der Formulierung nicht überschreiten und beträgt üblicherweise 0,01 bis 5 Gew.-%, insbesondere 0,1 bis 5 Gew.-%, bevorzugt 0,5 bis 3 Gew.-% und besonders bevorzugt 1 bis 2 Gew.-%.

Die Formulierung wird durch mindestens eine Injektionsbohrung in die Erdöllagerstätte eingepresst, und der Lagerstätte wird durch mindestens eine Produktionsbohrung Rohöl entnommen. Mit dem Begriff "Rohöl" ist in diesem Zusammenhang selbstverständlich nicht nur phasenreines Öl gemeint, sondern der Begriff umfasst auch die üblichen Rohöl-Wasser-Emulsionen. In der Regel wird eine Lagerstätte mit mehreren Injektionsbohrungen und mit mehreren Produktionsbohrungen versehen. Durch den durch die eingepresste Formulierung, die sogenannte "Polymerflut" erzeugten Druck, fließt das Erdöl in Richtung der Produktionsbohrung und wird über die Produktionsbohrung gefördert. Die Viskosität des Flutmediums sollte möglichst an die Viskosität des Erdöls in der Erdöllagerstätte angepasst werden. Die Viskosität kann insbesondere über die Konzentration des Copolymers eingestellt werden.

Zur Erhöhung der Erdölausbeute kann das Polymerfluten vorteilhaft mit anderen Techniken der tertiären Erdölförderung kombiniert werden.

In einer bevorzugten Ausführungsform der Erfindung kann das "Polymerfluten" unter Verwendung der erfindungsgemäßen hydrophob assoziierenden Copolymere mit einem vorangehenden, sogenannten "Tensidfluten" kombiniert werden. Hierbei wird vor dem Polymerfluten zunächst eine wässrige Tensidformulierung in die Erdölformation eingepresst werden. Hierdurch wird die Grenzflächenspannung zwischen dem Formationswasser und dem eigentlichen Erdöl verringert und somit die Mobilität des Erdöls in der Formation erhöht. Durch die Kombination beider Techniken lässt sich die Erdölausbeute erhöhen.

Beispiele geeigneter Tenside zum Tensidfluten umfassen Sulfatgruppen, Sulfonatgruppen, Polyoxyalkylengruppen, anionisch modifizierten Polyoxyalkylengruppen, Betaingruppen, Glucosidgruppen oder Aminoxidgruppen aufweisende Tenside, wie beispielsweise Alkylbenzolsulfonate, Olefinsulfonate oder Amidopropylbetaine. Bevorzugt können anionische und/oder betainische Tenside eingesetzt werden.

Dem Fachmann sind Einzelheiten zur technischen Durchführung des "Polymerflutens" und des "Tensidflutens" bekannt, und er wendet je nach Art der Lagerstätte eine entsprechende Technik an.

Es ist selbstverständlich auch möglich Tenside und die erfindungsgemäßen Copolymere im Gemisch einzusetzen.

Für die soeben genannte bevorzugte Verwendung zur Erschließung, Ausbeutung und Komplettierung unterirdischer Erdöl- und Erdgaslagerstätten können die eingangs beschriebenen Copolymere verwendet werden. Bevorzugt kann das nachfolgend beschriebene Copolymer eingesetzt werden. Dementsprechend betrifft die Erfindung in einer bevorzugten Ausführungsform ein bevorzugtes, hydrophob assoziierendes Copolymer (A1).

Bevorzugt enthält das Copolymer (A1) nur Monomere (a), (b) und (c) und besonders bevorzugt nur Monomere (a) und (b). Bei den Monomeren (a) handelt es sich bevorzugt nur um eines oder mehrere Monomere der Formel (I). Bevorzugte Monomere (a) der Formel (I) wurden bereits eingangs erwähnt.

Bei dem hydrophob assoziierenden Copolymer (A1) werden die Monomere (a) in einer Menge von 0,1 bis 12 Gew.-%, bevorzugt 0,1 bis 5 Gew.-%, besonders bevorzugt 0,2 bis 3 Gew.-% und ganz besonders bevorzugt 0,3 bis 2 Gew.-% eingesetzt.

Die Menge aller Monomere (b) zusammen beträgt beim Copolymer (A1) 70 bis 99,9 Gew.-%, bevorzugt 80 bis 99,8 Gew.-% bezüglich der Menge aller eingesetzten Monomere. Die Menge aller Monomere (c) zusammen beträgt -sofern vorhandennicht mehr als 29,9 Gew.-%, bevorzugt nicht mehr als 19,9 Gew.-%.

Die Copolymere (A1) umfassen in der Regel mindestens ein neutrales, hydrophiles Monomer (b1). Beispiele geeigneter Monomere (b1) umfassen Acrylamid und Methacrylamid, bevorzugt Acrylamid sowie Derivate davon, wie beispielsweise N-Methyl(meth)acrylamid, N, N'-Dimethyl(meth)acrylamid sowie N-Methylolacrylamid. Weiterhin zu nennen sind N-Vinylderivate wie N-Vinylformamid, N-Vinylacetamid, N-Vinylpyrrolidon oder N-Vinylcaprolactam. Weiterhin zu nennen sind OH-Gruppen aufweisende Monomere wie Hydroxyethyl(meth)acrylat, Hydroxypropyl(meth)acrylat, Allylalkohol, Hydroxyvinylethylether, Hydroxyvinylpropylether oder Hydroxyvinylbutylether. Bevorzugt handelt es sich bei dem Monomer (b1) in Copolymer (A1) um Acrylamid beziehungsweise Derivate davon, besonders bevorzugt um Acrylamid.

In einer weiteren Ausführungsform der Erfindung handelt es sich bei dem in Copolymer (A1) eingesetzten Monomer um mindestens ein anionisches Monomer (b2) und/oder mindestens ein kationisches Monomer (b2).

Bei den anionischen Monomeren (b2) handelt es sich um Säuregruppen umfassende Monomere, bevorzugt um Monomere, welche mindestens eine Gruppe ausgewählt aus der Gruppe von -COOH, -SO₃H oder -PO₃H₂ umfassen. Bevorzugt handelt es sich bei den Monomeren (b2) um Carboxylgruppen -COOH und/oder Sulfonsäuregruppen - SO₃H umfassende Monomere, besonders bevorzugt um Sulfonsäuregruppen -SO₃H umfassende Monomere. Selbstverständlich kann es sich auch um die Salze der sauren Monomere handeln. Geeignete Gegenionen umfassen insbesondere Alkalimetallionen wie Li⁺, Na⁺ oder K⁺ sowie Ammoniumionen wie NH₄⁺ oder Ammoniumionen mit organischen Resten.

Beispiele für anionische Monomere (b2) umfassen Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Phosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Beispiele bevorzugter anionischer Monomere (b2) umfassen Acrylsäure, Vinylsulfonsäure, Allylsulfonsäure, 2-Acrylamido-2-methylpropansulfonsäure (AMPS), 2-Acrylamidobutansulfonsäure, 3-Acrylamido-3-methyl-butansulfonsäure und 2-Acrylamido-2,4,4-trimethylpentansulfonsäure, ganz besonders bevorzugt ist 2-Acrylamido-2-methylpropansulfonsäure (AMPS).

Bei kationischen Monomeren (b3) handelt es sich in der Regel um Ammoniumgruppen umfassende Monomere, bevorzugt die oben genannten Monomere der Formeln H₂C=C(R⁸)-CO-NR¹⁴-R¹²-NR¹³₃⁺ X- (Va) und/oder H₂C=C(R⁷)-COO-R¹²-NR¹³₃⁺ X-(Vb), wobei die Reste und die jeweils bevorzugten Bereiche bzw. Spezies jeweils wie oben definiert sind. Beispiele bevorzugter Monomere (b3) umfassen 3-Trimethylammonium-propylacrylamidchlorid. (DIMAPAQUAT).

Beispiele derartiger bevorzugter Copolymere (A1) umfassen solche, welche mindestens ein Monomer (a) sowie Acrylamid oder eines der oben genannten Acrylamid-Derivate, jeweils in den oben genannten Mengen umfassen, sowie Copolymere, welche neben den Monomeren (a) als Monomer (b) Sulfonsäuregruppen umfassende Monomere, insbesondere die oben genannten Sulfonsäuregruppen umfassende Monomere und besonders bevorzugt AMPS umfassen.

In einer weiteren bevorzugten Ausführungsform der Erfindung umfasst das Copolymer (A1) mindestens ein neutrales Monomer (b1) und mindestens ein anionisches Monomer (b2) oder mindestens ein kationisches Monomer (b3), besonders bevorzugt mindestens ein neutrales Monomer (b1) und mindestens ein anionisches Monomer (b2).

Bei dieser Ausführungsform hat es sich bewährt, das neutrale Monomer (b1) in einer Menge von 20 bis 95 Gew.-%, bevorzugt 30 bis 90 Gew.-% und das anionische Monomer (b2) bzw. das kationische Monomer (b3) in einer Menge von 4,9 bis 79,9 Gew.-%, bevorzugt 20 bis 69,9 Gew.-% einzusetzen, mit der Maßgabe, dass die Gesamtmenge der Monomere (b) zusammen 70 bis 99,9 Gew.-% beträgt. Die Monomere (a) werden in den oben genannten Mengen eingesetzt.

Beispiele derartiger bevorzugter Copolymere (A1) umfassen Copolymere, welche mindestens ein Monomer (a) sowie Acrylamid oder eines der oben genannten Acrylamid-Derivate sowie als Monomer (b2) Sulfonsäuregruppen umfassende Monomere, insbesondere die oben genannten Sulfonsäuregruppen umfassende Monomere und besonders bevorzugt AMPS umfassen.

In einer weiteren bevorzugten Ausführungsform der Erfindung umfasst das Copolymer (A1) mindestens ein neutrales Monomer (b1), mindestens ein anionisches Monomer (b2) und mindestens ein kationisches Monomer (b3).

Bei dieser Ausführungsform hat es sich bewährt, das neutrale Monomer (b1) in einer Menge von 20 bis 95 Gew.-%, bevorzugt 30 bis 90 Gew.-% und die ionischen Monomere (b2) und (b3) zusammen in einer Menge von 4,9 bis 79,9 Gew.-%, bevorzugt 20 bis 69,9 Gew.-% einzusetzen, mit der Maßgabe, dass die Gesamtmenge der Monomere (b) zusammen 70 bis 99,9 Gew.-% beträgt. In einer bevorzugten Ausführungsform beträgt das molare Verhältnis der eingesetzten anionischen Monomere (b2) und der kationischen Monomere (b3) (b2)/(b3) 0,5 bis 1,5, bevorzugt 0,7 bis 1,3, besonders bevorzugt 0,8 bis 1,2 und beispielsweise 0,9 bis 1,1. Durch diese Maßnahme lassen sich Copolymere erhalten, welche besonders unempfindlich auf Salzfracht reagieren.

Beispiele derartiger bevorzugter Copolymere (A1) umfassen Copolymere, welche mindestens ein Monomer (a) sowie Acrylamid oder eines der oben genannten Acrylamid-Derivate sowie als Monomer (b2) Sulfonsäuregruppen umfassende Monomere, insbesondere die oben genannten Sulfonsäuregruppen umfassende Monomere und besonders bevorzugt AMPS umfassen, sowie als Monomer (b3) ein Salz von 3-Trimethylammoniumpropylacrylamid.

Die Herstellung des Copolymers (A1) erfolgt bevorzugt fotochemisch mittels der bereits beschriebenen Gelpolymerisation.

Die Copolymere (A1) weisen bevorzugt ein gewichtsmittleres Molekulargewicht M_{w} von 1 000 000 g/mol bis 20 000 000 g/mol auf, bevorzugt 5 000 000 g/mol bis 20 000 000 g/mol und besonders bevorzugt 10 000 000 g/mol bis 20 000 000 g/mol auf.

Die Copolymere (A1) zeichnen sich für die beschriebene Verwendung zur Erschließung, Ausbeutung und Komplettierung, insbesondere die tertiäre Erdölförderung durch eine besonders hohe Temperatur- und Salzstabilität aus. Weiterhin führt die erfindungsgemäße Verwendung der Monomere (a) der Formel (I) zu Copolymeren mit einem besonders niedrigen Gelanteil. Hierdurch wird ein Verstopfen der Erdöllagerstätte wirksam vermieden.

### Zweite bevorzugte Verwendung und hierfür bevorzugte Copolymere (A2) und (A3)

In einer zweiten bevorzugten Ausführungsform der Erfindung können die erfindungsgemäßen Copolymere als Additiv für wässrige Baustoffsysteme, die hydraulische Bindemittelsysteme enthalten, verwendet werden. Beispiele derartiger hydraulischer Bindemittelsysteme umfassen Zement, Kalk, Gips oder Anhydrit.

Beispiele derartiger Baustoffsysteme umfassen nichtfließfähige Baustoffsysteme wie Fliesenkleber, Putze oder Fugenfüller sowie fließfähige Baustoffsysteme wie selbstverlaufende Bodenspachtelmassen, Verguss- und Reparaturmörtel, Fließestriche, Fließbeton, selbstverdichtender Beton, Unterwasserbeton oder Unterwassermörtel.

Die bevorzugten Einsatzmengen der erfindungsgemäßen Copolymere liegen in Abhängigkeit von der Verwendungsart zwischen 0,001 und 5 Gew.-% bezogen auf das Trockengewicht des Baustoffsystems.

Die erfindungsgemäßen, hydrophob assoziierenden Copolymere können auch in Kombination mit nichtionischen Polysaccharid-Derivaten wie Methylcellulose (MC), Hydroxyethylcellulose (HEC), Hydroxypropylcellulose (HPC), Methylhydroxyethylcellulose (MHEC), Methylhydroxypropylcellulose (MHPC) sowie Welan Gum oder Diutan Gum eingesetzt werden.

Für Trockenmörtelanwendungen (z. B. Fliesenkleber, Vergussmörtel, Putze, Fließestriche) werden die erfindungsgemäßen, hydrophob assoziierenden Copolymere in Pulverform eingesetzt. Dabei ist es empfehlenswert, die die Größenverteilung der Teilchen durch Anpassung der Mahlparameter so zu wählen, dass der mittlere Teilchendurchmesser kleiner 100 µm ist und der Anteil an Partikeln mit einem Teilchendurchmesser größer 200 µm kleiner als 2 Gew.-% ist. Bevorzugt sind solche Pulver, deren mittlerer Teilchendurchmesser kleiner 60 µm ist und der Anteil an Partikeln mit einem Teilchendurchmesser größer 120 µm kleiner als 2 Gew.-% ist. Besonders bevorzugt sind solche Pulver, deren mittlerer Teilchendurchmesser kleiner 50 µm ist und der Anteil an Partikeln mit einem Teilchendurchmesser größer 100 µm kleiner als 2 Gew.-% ist.

Im Beton werden die erfindungsgemäßen Copolymere bevorzugt in Form wässriger Lösungen eingesetzt. Zur Herstellung der Lösungen eignen sich besonders die gröberen Granulate der erfindungsgemäßen Copolymere mit einem mittleren Teilchendurchmesser zwischen 300 µm und 800 µm, wobei der Anteil an Partikeln mit einem Teilchendurchmesser kleiner 100 µm geringer als 2 Gew.-% ist. Gleiches gilt, wenn die erfindungsgemäßen Copolymere in anderen Betonzusatzmitteln bzw. Formulierungen aus Betonzusatzmitteln aufgelöst werden (z.B. in einem Fließmittel).

Für die soeben genannte bevorzugte Verwendung als Additiv für hydraulische Bindemittel enthaltende wässrige Baustoffsysteme kann neben den erfindungsgemäßen, hydrophob assoziierenden Copolymeren A1 bevorzugt das nachfolgend beschriebene, hydrophob assoziierende Copolymer (A2) verwendet werden.

Dementsprechend betrifft die Erfindung in einer bevorzugten Ausführungsform ein bevorzugtes, hydrophob assoziierendes Copolymer (A2). Das bevorzugte Copolymer (A2) eignet sich insbesondere als Additiv für nichtfließfähige Baustoffsysteme wie Fliesenkleber, Putze oder Fugenfüller.

Bei dem hydrophob assoziierenden Copolymer (A2) werden die Monomere (a) in einer Menge von 0,1 bis 12 Gew.-%, bevorzugt 1 bis 10 Gew.-% und besonders bevorzugt 1,5 bis 8 Gew.-% eingesetzt. Bevorzugt enthält das Copolymer (A2) nur Monomere (a), (b) und (d) und besonders bevorzugt nur Monomere (a) und (b).

Bei den Monomeren (a) kann es sich ausschließlich um Monomere (a) der Formel (I) handeln, in einer bevorzugten Ausführungsform können beim Copolymer (A2) aber auch die Monomere (a) der Formel (I) im Gemisch mit anderen hydrophob assoziierenden Monomeren, bevorzugt solchen der allgemeinen Formel H₂C=C(R¹)-COO-(-CH₂-CH(R⁶)-O-)_{q}-R⁷ (IIa) und/oder H₂C=C(R¹)-O-(-CH₂-CH(R⁶)-O-)_{q}-R⁷ (IIb) eingesetzt werden. Die Bedeutung der Reste und Indices sowie bevorzugte Bereiche wurden bereits eingangs geschildert. Bei einer derartigen Mischung sollte der Anteil der Monomere der Formel (I) in der Regel zumindest 25 Gew.-% bezüglich der Menge aller Monomere (a) betragen, bevorzugt 40 bis 90 Gew.-% und beispielsweise 40 bis 60 Gew.-%. Bevorzugte Monomere (a) der Formel (I) wurden bereits oben erwähnt.

Das Copolymer (A2) umfasst als Monomere (b) mindestens ein neutrales Monomer (b1) sowie mindestens ein anionisches Monomer (b2) und/oder mindestens ein kationisches Monomer (b3), bevorzugt mindestens ein neutrales Monomer (b1) sowie mindestens ein kationisches Monomer (b3).

Beispiele geeigneter Monomere (b1), (b2) und (b3) wurden bereits genannt.

Bei den neutralen Monomeren (b1) in Copolymer (A2) handelt es sich bevorzugt um Acrylamid oder Methacrylamid sowie Derivate davon, wie beispielsweise N-Methyl(meth)acrylamid, N, N'-Dimethyl(meth)acrylamid, N-Methylolacrylamid sowie N-Vinylderivate wie N-Vinylformamid, N-Vinylacetamid, N-Vinylpyrrolidon oder N-Vinylcaprolactam. Bevorzugte Monomere (b1) beim Copolymer (A2) sind Acrylamid, Methacrylamid und N-Vinylpyrrolidon.

Bei den anionischen Monomeren (b2) in Copolymer (A2) handelt es sich um Säuregruppen umfassende Monomere, bevorzugt um Monomere, welche mindestens eine Gruppe ausgewählt aus der Gruppe von Carboxylgruppen -COOH, Sulfonsäuregruppen -SO₃H oder Phosphonsäuregruppen -PO₃H₂ umfassen.

Bei den anionischen Monomeren (b2) im Copolymer (A2) handelt es sich bevorzugt um Sulfonsäuregruppen -SO₃H umfassende Monomere. Beispiele bevorzugter Monomere umfassen Vinylsulfonsäure, Allylsulfonsäure, 2-Acrylamido-2-methylpropansulfonsäure (AMPS), 2-Acrylamidobutansulfonsäure, 3-Acrylamido-3-methyl-butansulfonsäure und 2-Acrylamido-2,4,4-trimethylpentansulfonsäure, bevorzugt ist 2-Acrylamido-2-methylpropansulfonsäure (AMPS).

Bei den kationischen Monomeren (b3) in Copolymer (A2) handelt es sich bevorzugt um die oben genannten Monomere der Formeln H₂C=C(R⁸)-CO-NR¹⁴-R¹²-NR¹³3⁺ X- (Va) und/oder H₂C=C(R⁸)-COO-R¹²-NR¹³₃⁺ X⁻ (Vb), wobei die Reste und die jeweils bevorzugten Bereiche bzw. Spezies jeweils wie oben definiert sind. Besonders bevorzugt ist 3-Trimethylammonium-propylacrylamidchlorid (DIMAPAQUAT).

Bei den Copolymeren (A2) beträgt die Menge der anionischen Monomere (b2) und der kationischen Monomere (b3) im Regelfalle 25 bis 80 Gew.-%, bezüglich der Summe aller Monomere, bevorzugt 40 bis 75 Gew.-% besonders bevorzugt 45 bis 70 Gew.-% und die der neutralen Monomere (b1) 15 bis 60 Gew.-%, bevorzugt 20 bis 50 Gew.-%, mit der Maßgabe, dass die Summe der Monomere (b1) und (b2) und (b3) zusammen 70 bis 99,9 Gew.-% beträgt. Die Monomere (a) werden in den eingangs erwähnten Mengen eingesetzt.

Bevorzugte Copolymere (A2) umfassen entweder ein anionisches Monomer (b2) oder ein kationisches Monomer (b3) in den bereits genannten Mengen. Sofern ein Gemisch aus (b2) und (b3) eingesetzt wird, ist das Gewichtsverhältnis (b2) / (b3) prinzipiell frei wählbar.

Für die soeben genannte bevorzugte Verwendung als Additiv für hydraulische Bindemittel enthaltende wässrige Baustoffsysteme kann auch das nachfolgend beschriebene, hydrophob assoziierende Copolymer (A3) verwendet werden. Dementsprechend betrifft die Erfindung in einer dritten bevorzugten Ausführungsform ein hydrophob assoziierendes Copolymer (A3). Das bevorzugte Copolymer (A3) eignet sich insbesondere als Additiv für fließfähige Baustoffsysteme, insbesondere für Beton, Fließestriche, selbstverlaufende Spachtelmassen und Vergussmörtel.

Bei dem hydrophob assoziierenden Copolymer (A3) werden die Monomere (a) in einer Menge von 0,1 bis 12 Gew.-%, bevorzugt 1 bis 10 Gew.-% und besonders bevorzugt 1,5 bis 8 Gew.-% eingesetzt. Bevorzugt enthält das Copolymer (A3) nur Monomere (a), (b) und (d) und besonders bevorzugt nur Monomere (a) und (b).

Bei den Monomeren (a) kann es sich ausschließlich um Monomere (a) der Formel (I) handeln, in einer bevorzugten Ausführungsform können beim Copolymer (A3) aber auch die Monomere (a) der Formel (I) im Gemisch mit anderen hydrophob assoziierenden Monomeren, bevorzugt solchen der allgemeinen Formel H₂C=C(R¹)-COO-(-CH₂-CH(R⁶)-O-)_{q}-R⁷ (IIa) und/oder H₂C=C(R¹)-O-(-CH₂-CH(R⁶)-O-)_{q}-R⁷ (IIb) eingesetzt werden. Die Bedeutung der Reste und Indices sowie bevorzugte Bereiche wurden bereits eingangs geschildert. Bei einer derartigen Mischung sollte der Anteil der Monomere der Formel (I) in der Regel zumindest 25 Gew.-% bezüglich der Menge aller Monomere (a) betragen, bevorzugt 40 bis 90 Gew.-% und beispielsweise 40 bis 60 Gew.-%. Bevorzugte Monomere (a) der Formel (I) wurden bereits oben erwähnt.

Das Copolymer (A3) umfasst als Monomere (b) mindestens ein neutrales Monomer (b1) sowie mindestens ein anionisches Monomer (b2). Beispiele geeigneter Monomere (b1) und (b2) wurden bereits genannt.

Bei den neutralen Monomeren (b1) in Copolymer (A3) handelt es sich um Acrylamid oder Methacrylamid sowie Derivate davon, wie beispielsweise N-Methyl(meth)acrylamid, N, N'-Dimethyl(meth)acrylamid, N-Methylolacrylamid sowie N-Vinylderivate wie N-Vinylformamid, N-Vinylacetamid, N-Vinylpyrrolidon oder N-Vinylcaprolactam. Bevorzugte Monomere (b1) beim Copolymer (A3) sind Acrylamid, Methacrylamid und N-Vinylpyrrolidon.

Bei den anionischen Monomeren (b2) in Copolymer (A3) handelt es sich um Säuregruppen umfassende Monomere, bevorzugt um Monomere, welche mindestens einen Gruppe ausgewählt aus der Gruppe von Carboxylgruppen -COOH, Sulfonsäuregruppen -SO₃H oder Phosphonsäuregruppen -PO₃H₂ umfassen.

Bevorzugt handelt es sich bei Copolymer (A3) bei den Monomeren (b2) um Sulfonsäuregruppen -SO₃H umfassende Monomere. Beispiele bevorzugter Monomere umfassen Vinylsulfonsäure, Allylsulfonsäure, 2-Acrylamido-2-methylpropansulfonsäure (AMPS), 2-Acrylamidobutansulfonsäure, 3-Acrylamido-3-methyl-butansulfonsäure und 2-Acrylamido-2,4,4-trimethylpentansulfonsäure, bevorzugt ist 2-Acrylamido-2-methylpropansulfonsäure (AMPS).

Bei den bevorzugten Copolymeren (A3) beträgt die Menge der anionischen Monomere (b2) im Regelfalle 25 bis 94,9 Gew.-%, bezüglich der Summe aller Monomere, bevorzugt 50 bis 90 Gew.-% besonders bevorzugt 60 bis 90 Gew.-% und die der neutralen Monomere (b1) 5 bis 50 Gew.-%, bevorzugt 5 bis 30 Gew.-%, mit der Maßgabe, dass die Summe der Monomere (b1) und (b2) zusammen 70 bis 99,9 Gew.-% beträgt. Die Monomere (a) werden in den eingangs erwähnten Mengen eingesetzt.

Für den Einsatz als Additiv für wässrige Baustoffsysteme kann es vorteilhaft sein, zusätzlich vernetzende Monomere (d) einzusetzen. Hierdurch erhalten die erfindungsgemäßen hydrophob assoziierenden Copolymere (A1), (A2) und (A3) eine leicht verzweigte oder vernetzte Struktur.

Beispiele bevorzugter Monomere (d) umfassen Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat.

Die Menge der Monomere (d) wird vom Fachmann je nach den gewünschten Eigenschaften der Copolymere bestimmt. Die Monomere (d) dürfen aber nur in solchen Mengen eingesetzt werden, dass die Wasserlöslichkeit der erfindungsgemäßen, hydrophob assoziierenden Copolymere nicht beeinträchtigt wird. Im Regelfalle sollte die Menge der Monomere (d) 1 Gew.-% bezüglich der Menge alle eingesetzten Monomere nicht überschreiten. Bevorzugt sollten nicht mehr als 0,5 Gew.-% und besonders bevorzugt nicht mehr als 0,1 Gew.-% eingesetzt werden; ein Fachmann kann jedoch leicht die maximal einsetzbare Menge der Monomere (d) bestimmen.

### Dritte bevorzugte Verwendung und hierfür bevorzugte Copolymere (A4)

In einer vierten bevorzugten Ausführungsform der Erfindung handelt es sich um ein hydrophob assoziierendes Copolymer (A4). Beim Copolymer (A4) handelt es sich in der Regel um eine alkalilösliche Dispersion. Derartige Copolymere eigenen sich insbesondere zum Einsatz als Verdicker im Bereich von Wasch- und Reinigungsmitteln, kosmetischen Formulierungen und chemisch-technischen Anwendungen.

Das Copolymer (A4) umfasst neben den Monomeren (a) mindestens ein Säuregruppen aufweisendes Monomer (b) sowie mindestens ein Monomer (c). Selbstverständlich können auch mehrere verschiedene Monomere (c) eingesetzt werden.

Bevorzugte Monomere (a) wurden bereits eingangs erwähnt.

Bei den Säuregruppen aufweisenden Monomeren (b) in Copolymer (A4) handelt es sich bevorzugt um die bereits oben zitierten Monomere (b2). Bevorzugt handelt es sich um Carbonsäuregruppen aufweisende Monomere, wie beispielsweise Acrylsäure, Methacrylsäure, Crotonsäure, Itaconsäure, Maleinsäure oder Fumarsäure, besonders bevorzugt handelt es sich um (Meth)acrylsäure.

Bei den Monomeren (c) handelt es sich bevorzugt um mindestens einen (Meth)acrylsäureester der allgemeinen Formel H₂C=C(R¹⁶)-COOR¹⁸, wobei R¹⁶ und R¹⁸ wie oben definiert sind. Beispiele derartiger Monomere (c) umfassen Ester der (Meth)acrylsäure, beispielsweise Alkyl(meth)acrylate, wie Methyl(meth)acrylat, Ethyl(meth)acrylat, n-Propyl(meth)acrylat, n-Butyl(meth)acrylat, 2-Ethylhexyl(meth)acrylat oder 2-Propylheptyl(meth)acrylat.

Bevorzugt umfasst das Copolymer (A4) mindestens einen (Meth)acrylsäureester, bei dem R⁹ für einen aliphatischen, geradkettigen oder verzweigten Kohlenwasserstoffrest mit 2 bis 10 Kohlenstoffatomen, bevorzugt 4 bis 8 Kohlenstoffatomen steht. Beispiele umfassen Ethyl(meth)acrylat, n-Propyl(meth)acrylat, n-Butyl(meth)acrylat, 2-Ethylhexyl(meth)acrylat oder 2-Propylheptyl(meth)acrylat.

Bei dem hydrophob assoziierenden Copolymer (A4) werden die Monomere (a) in einer Menge von 0,1 bis 20 Gew.-%, bevorzugt 0,5 bis 15 Gew.-% und besonders bevorzugt 2 bis 12 Gew.-% eingesetzt, jeweils bezogen auf die Gesamtmenge alle Monomere im Copolymer.

Die Menge der Monomere (b) beträgt bei den Copolymeren (A4) 25 bis 94,9 Gew.-%, bevorzugt 25 bis 50 Gew.-% und besonders bevorzugt 25 bis 40 Gew.-%.

Die Menge der Monomere (c) beträgt bei den Copolymeren (A4) 5 bis 74,9 Gew.-%, bevorzugt 25 bis 74,5 Gew.-% und besonders bevorzugt 50 bis 70 Gew.-%

Die erfindungsgemäßen Copolymere (A4) eignen sich insbesondere als Verdickungsmittel oder Rheologiemodifizierer in Streichmassen, beispielsweise für Waschmittel, Waschhilfsmittel wie bspw. pre-spotter, Weichspüler, kosmetische Formulierungen, pharmazeutische Formulierungen, Nahrungsmittel, Streichmassen, Formulierungen für die Textilherstellung, Textildruckpasten, Druckfarben, Druckpasten für den Textildruck, Anstrichfarben, Pigmentslurries, wässrige Formulierungen zur Schaumerzeugung, enteisende Mischungen, beispielsweise für Flugzeuge, Formulierungen für die Bauindustrie, wie beispielsweise als Additiv für wässrige Baustoffsysteme auf Basis hydraulischer Bindemittel wie Zement, Kalk, Gips und Anhydrit sowie in wasserbasierenden Anstrich- und Beschichtungssystemen.

Besonders bevorzugt ist die Verwendung in flüssigen Wasch- und Reinigungsmitteln. Flüssige Wasch- und Reinigungsmittel umfassen neben einem Copolymer (A4) eines oder mehrere anionische, nichtionische, kationische und/oder amphotere Tenside sowie weitere typische Waschmitteladditive. Bevorzugt sind Mischungen aus anionischen und nichtionischen Tensiden. Der Gesamttensidgehalt des flüssigen Wasch- oder Reinigungsmittel beträgt vorzugsweise 0,5 bis 80 Gew.-% und besonders bevorzugt 0,5 bis 50 Gew.-%, bezogen auf das gesamte flüssige Wasch- oder Reinigungsmittel. Geeignete Tenside sind dem Fachmann bekannt und beispielsweise in WO 2009/019225, Seite 8, Zeile 34 bis Seite 12, Zeile 37 offenbart.

Bei den weiteren Komponenten handelt es sich um einen oder mehrere Stoffe ausgewählt aus der Gruppe der Gerüststoffe, Bleichmittel, Bleichaktivatoren, Enzyme, Elektrolyte, nichtwässrigen Lösungsmittel, pH-Stellmittel, Duftstoffe, Parfümträger, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber. Derartige Waschmitteladditive sind dem Fachmann bekannt und beispielsweise in WO 2009/019225, Seite 12, Zeile 39 bis Seite 24, Zeile 4 offenbart.

Die folgenden Beispiele sollen die Erfindung näher erläutern:

### Teil A) Herstellung der Monomere (I)

### Herstellung eines Hydroxybutylvinyletheralkoxylats mit 22 EO-Einheiten und 8 PeO-Einheiten (Monomer M1):

In einem 1 L Rührautoklaven aus Edelstahl wurden 52,3 g Hydroxybutylvinylether vorgelegt. Anschließend wurden 2,99 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 436 g EO innerhalb von ca. 3,5 h dosiert. Nach einer halbstündigen Nachreaktion bei 140 °C wurde der Reaktor auf 125 °C abgekühlt und es wurden innerhalb von 3,0 h insgesamt 310 g Pentenoxid eindosiert. Die Nachreaktion lief über Nacht.

Das Produkt hatte eine OH-Zahl von 34,2 mg KOH/g (Theorie: 31,6 mg KOH/g). Die OH-Zahl wurde mittels der ESA-Methode ermittelt.

### Herstellung eines Hydroxybutylvinyletheralkoxylats mit 22 EO-Einheiten und 12 PeO-Einheiten (Monomer M2):

In einem 1 L Rührautoklaven aus Edelstahl wurden 44,1 g Hydroxybutylvinylether vorgelegt. Anschließend wurden 3,12 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 368 g EO innerhalb von ca. 3 h dosiert. Nach einer halbstündigen Nachreaktion bei 140 °C wurde der Reaktor auf 125 °C abgekühlt und es wurden innerhalb von 3,5 h insgesamt 392 g Pentenoxid eindosiert. Die Nachreaktion lief über Nacht.

Das Produkt hatte eine OH-Zahl von 31,9 mg KOH/g (Theorie: 26,5 mg KOH/g). Die OH-Zahl wurde mittels der ESA-Methode ermittelt.

### Herstellung eines Hydroxybutylvinyletheralkoxylats mit 22 EO-Einheiten und 16 PeO-Einheiten (Monomer M3):

In einem 1 L Rührautoklaven aus Edelstahl wurden 37,8 g Hydroxybutylvinylether vorgelegt. Anschließend wurden 3,01 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 315 g EO innerhalb von ca. 3 h dosiert. Nach einer halbstündigen Nachreaktion bei 140 °C wurde der Reaktor auf 125 °C abgekühlt und es wurden innerhalb von 4,5 h insgesamt 448 g Pentenoxid eindosiert. Die Nachreaktion lief über Nacht.

Das Produkt hatte eine OH-Zahl von 25,2 mg KOH/g (Theorie: 22,7 mg KOH/g). Die OH-Zahl wurde mittels der ESA-Methode ermittelt.

### Herstellung eines Hydroxybutylvinyletheralkoxylats mit 22 EO-Einheiten und 20 PeO-Einheiten (Monomer M4):

In einem 1 L Rührautoklaven aus Edelstahl wurden 33,2 g Hydroxybutylvinylether vorgelegt. Anschließend wurden 3,01 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 277 g EO innerhalb von ca. 2,5 h dosiert. Nach einer halbstündigen Nachreaktion bei 140 °C wurde der Reaktor auf 125 °C abgekühlt und es wurden innerhalb von 5 h insgesamt 492 g Pentenoxid eindosiert. Die Nachreaktion lief über Nacht.

Das Produkt hatte eine OH-Zahl von 23,2 mg KOH/g (Theorie: 20,0 mg KOH/g). Die OH-Zahl wurde mittels der ESA-Methode ermittelt.

### Herstellung eines Hydroxybutylvinyletheralkoxylats mit 68 EO-Einheiten und 8 PeO-Einheiten (Monomer M5):

In einem 1 L Rührautoklaven aus Edelstahl wurden 24,3 g Hydroxybutylvinylether vorgelegt. Anschließend wurden 2,98 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 627 g EO innerhalb von ca. 5,5 h dosiert. Nach einer halbstündigen Nachreaktion bei 140 °C wurde der Reaktor auf 125 °C abgekühlt und es wurden innerhalb von 2,5 h insgesamt 144 g Pentenoxid eindosiert. Die Nachreaktion lief über Nacht.

Das Produkt hatte eine OH-Zahl von 17,6 mg KOH/g (Theorie: 14,7 mg KOH/g). Die OH-Zahl wurde mittels der ESA-Methode ermittelt.

### Herstellung eines Hydroxybutylvinyletheralkoxylats mit 22 EO-Einheiten und 12 PeO-Einheiten (Monomer M6):

In einem 1 L Rührautoklaven aus Edelstahl wurden 22,5 g Hydroxybutylvinylether vorgelegt. Anschließend wurden 3,01 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 580 g EO innerhalb von ca. 5 h dosiert. Nach einer halbstündigen Nachreaktion bei 140 °C wurde der Reaktor auf 125 °C abgekühlt und es wurden innerhalb von 3,0 h insgesamt 200 g Pentenoxid eindosiert. Die Nachreaktion lief über Nacht.

Das Produkt hatte eine OH-Zahl von 16,8 mg KOH/g (Theorie: 13,5 mg KOH/g). Die OH-Zahl wurde mittels der ESA-Methode ermittelt.

### Herstellung eines Hydroxybutylvinyletheralkoxylats mit 132 EO-Einheiten und 8 PeO-Einheiten (Monomer M7):

In einem 1 L Rührautoklaven aus Edelstahl wurden 14,1 g Hydroxybutylvinylether vorgelegt. Anschließend wurden 3,02 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 706 g EO innerhalb von ca. 8 h dosiert. Nach einer halbstündigen Nachreaktion bei 140 °C wurde der Reaktor abgekühlt. Am nächsten Tag wurden bei 125 °C innerhalb von 2,0 h insgesamt 83,6 g Pentenoxid eindosiert. Es schloss sich eine Nachreaktion von 5 Stunden bei 125 °C an.

Das Produkt hatte eine OH-Zahl von 10,2 mg KOH/g (Theorie: 8,5 mg KOH/g). Die OH-Zahl wurde mittels der ESA-Methode ermittelt.

Die Daten der synthetisierten Monomere M1 bis M7 sind in der nachfolgenden Tabelle 1 zusammengestellt. Alle Monomere weisen eine terminale OH-Gruppe auf.

**Tabelle 1: Synthetisierte Monomere (I)**

| Monomer Nr. | Alkohol | Block 1 | Block 2 | | OH-Zahl [mg KOH / g] |
|---|---|---|---|---|---|
| | | Anzahl der EO-Einheiten | Alkylenoxid | Anzahl der Einheiten | |
| M1 | 4-Hydroxybutylvinylether | 22 | Pentenoxid | 8 | 34,2 |
| M2 | 4-Hydroxybutylvinylether | 22 | Pentenoxid | 12 | 31,9 |
| M3 | 4-Hydroxybutylvinylether | 22 | Pentenoxid | 16 | 25,2 |
| M4 | 4-Hydroxybutylvinylether | 22 | Pentenoxid | 20 | 23,2 |
| M5 | 4-Hydroxybutylvinylether | 68 | Pentenoxid | 8 | 17,6 |
| M6 | 4-Hydroxybutylvinylether | 68 | Pentenoxid | 12 | 16,8 |
| M7 | 4-Hydroxybutylvinylether | 132 | Pentenoxid | 8 | 10,2 |

Für die Vergleichsversuche wurden kommerziell erhältliche, hydrophob assoziierende Monomere der nachfolgenden allgemeinen Formel eingesetzt: H₂C=C(CH₃)-COO-(EO)ₓ-R.
R und x haben hierbei bei den Monomeren M8 und M9 die folgende Bedeutung:
- M8:: x = 25, R=Tristyrylphenyl-
- M9:: x = 7, R= n-Dodecyl

### Teil B) Herstellung der hydrophob assoziierende Copolymere

### Teil B-1) Herstellung hydrophob assoziierende Copolymere vom Typ (A1)

### Beispiel 1:

Hydrophob, assoziierendes amphoteres Copolymer vom Typ (A1) aus Acrylamid (35,9 Gew.-%), einem anionischen Monomer (Acrylamido-2-methylpropansulfonsäure, Na-Salz, 32,1 Gew.-%), einem kationischen Monomer (3-Trimethylammonium-propylacrylamidchlorid, 31,0 Gew.-%) sowie dem erfindungsgemäßen Monomer M1 (1 Gew.-%)

In einem 2 I-Dreihalskolben mit Rührer und Thermometer wurden die folgenden Komponenten miteinander gemischt:

| | |
|---|---|
| 139,1 g | Acrylamido-2-methylpropansulfonsäure, Na-Salz (58 Gew.-%ige Lösung in Wasser; 17,6 Mol %), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,8 Mol %), |
| 160,1 g | Acrylamid (50 Gew.-%ige Lösung in Wasser; 63,5 Mol%), |

| | |
|---|---|
| 2,1 g | Monomer M1, |
| 12 g | Harnstoff |

Als Molekulargewichtsregler wurden 1,5 g Natriumhypophosphit (0,1 Gew.-%ige Lösung in Wasser) zugegeben. Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm tert.-Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Vergleichsbeispiel 1:

Polymer analog Beispiel 1, aber ohne hydrophob assoziierendes Monomer

In einem 2 I-Dreihalskolben mit Rührer und Thermometer wurden die folgenden Komponenten miteinander gemischt:

| | |
|---|---|
| 139,1 g | Acrylamido-2-methylpropansulfonsäure, Na-Salz (58 Gew.-%ige Lösung in Wasser; 17,4 Mol%), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,5 Mol%), |
| 164,5 g | Acrylamid (50 Gew.-%ige Lösung in Wasser; 64,2 Mol%), |
| 12 g | Harnstoff |

Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm tert.-Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Vergleichsbeispiel 2:

Polymer analog Beispiel 1, aber anstelle des erfindungsgemäßen hydrophob assoziierende Monomers wurde das Monomer M8 eingesetzt

In einem 2 I-Dreihalskolben mit Rührer und Thermometer wurden die folgenden Komponenten miteinander gemischt:

| | |
|---|---|
| 139,1 g | Acrylamido-2-methylpropansulfonsäure, Na-Salz (58 Gew.-%ige Lösung in Wasser; 17,6 Mol%), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,8 Mol%), |
| 155,2 g | Acrylamid (50 Gew.-%ige Lösung in Wasser; 63,5 Mol%), |
| 3,5 g | Monomer M8, |
| 12 g | Harnstoff |

Als Molekulargewichtsregler wurden 1,5 g Natriumhypophosphit (0,1 Gew.-%ige Lösung in Wasser) zugegeben. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm tert.-Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Vergleichsbeispiel 3:

Polymer analog Beispiel 1, aber anstelle des erfindungsgemäßen hydrophob assoziierenden Monomers wurde das Monomer M9 eingesetzt

In einem 2 I-Dreihalskolben mit Rührer und Thermometer wurden die folgenden Komponenten miteinander gemischt:

| | |
|---|---|
| 139,0 g | Acrylamido-2-methylpropansulfonsäure, Na-Salz (58 Gew.-%ige Lösung in Wasser; 17,6 Mol%), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,8 Mol%), |
| 155,2 g | Acrylamid (50 Gew.-%ige Lösung in Wasser; 63,4 Mol%), |
| 2,2 g | Monomer M9, |
| 12 g | Harnstoff |

Als Molekulargewichtsregler wurden 1,5 g Natriumhypophosphit (0,1 Gew.-%ige Lösung in Wasser) zu gegeben. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm tert.-Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Beispiele 2 bis 8:

Hydrophob, assozüerende Copolymere vom Typ (A1) aus Acrylamid (48 Gew.-%) und Acrylamido-2-methylpropansulfonsäure, Na-Salz (50 Gew.-%) sowie einem erfindungsgemäßen, hydrophob assoziierenden Monomer (2 Gew.-%)

In einem 2 1-Dreihalskolben mit Rührer und Thermometer wurden die folgenden Komponenten miteinander gemischt:

| | |
|---|---|
| 290 g | destilliertes Wasser, |
| 242,5 g | Acrylamido-2-methylpropansulfonsäure, Na-Salz (58 Gew.-%ige Lösung in Wasser; 24,7 Mol%), |
| 1,2 g | Siliconentschäumer, |
| 2,4 g | Pentanatriumdiethylentriaminpentaacetat (Komplexbildner), |
| 228,8 g | Acrylamid (50 Gew.-%ige Lösung in Wasser; 75,2 Mol%), |
| 4,6 g | Monomere eines der Monomere M1 bis M7 (gemäß Tabelle) |

Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 200 ppm 2,2'-Azo-bis-(2-amidinopropan)-dihydrochlorid (als 1 Gew.-%ige Lösung), 10 ppm tert.-Butylhydroperoxid (als 0,1 Gew.-%ige Lösung), 5 ppm FeSO₄*7H₂O (als 1 Gew.-%ige Lösung) und 6 ppm Natriumbisulfit (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Teil B-2) Herstellung hydrophob assoziierende Copolymere der Typen (A2) und (A3)

### Beispiel 9

Hydrophob, assoziierendes Copolymer vom Typ (A2) aus Acrylamid (33 Gew.-%), 3-(Acrylamino-)propyl-trimethylammoniumchlorid (57 Gew.-%), Acrylsäure (2 Gew.-%) und einem Gemisch aus dem hydrophob assoziierenden Monomer M8 (3 Gew.-%) und dem erfindungsgemäßen Monomer M5 (5 Gew.-%)

In einem 2 I-Dreihalskolben mit Rührer und Thermometer wurden die folgenden Komponenten miteinander gemischt:

| | |
|---|---|
| 170 g | destilliertes Wasser, |
| 1,6 g | Siliconentschäumer, |
| 2,4 g | Pentanatriumdiethylentriaminpentaacetat (Komplexbildner), |
| 5,8 g | Acrylsäure (99,5 Gew.-%ig; 3,6 Mol-%), |
| 273,6 g | 3-(Acrylamino-)propyl-trimethylammoniumchlorid (60 Gew.-%ige Lösung in Wasser; 35,7 Mol-%), |
| 190,5 g | Acrylamid (50 Gew.-%ige Lösung in Wasser; 60,3 Mol-%), |
| 14,4 g | Monomer M8 (60 Gew.-%ige Lösung in Wasser), |
| 14,4 g | Monomer M5 (0,2 Mol-%), |

Als Molekulargewichtsregler wurden 0,5 g Ameisensäure (10 Gew.-%ige Lösung in Wasser) zu gegeben. Die Lösung wurde mit 20 %iger Natronlauge auf pH 7 eingestellt, durch 5 minütiges Spülen mit Stickstoff inertisiert und auf ca. 5°C abgekühlt. Die Lösung wurde in einen Plastikbehälter umgefüllt und anschließend wurden nacheinander 250 ppm 2,2'-Azo-bis-(2-amidinopropan)-dihydrochlorid (als 1 Gew.-%ige Lösung), 20 ppm tert.-Butylhydroperoxid (als 0,1 Gew.-%ige Lösung) und 30 ppm Natriumbisulfit (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Beispiel 10:

Hydrophob, assoziierendes Copolymer vom Typ (A2) aus Dimethylacrylamid (32 Gew.-%), 3-(Acrylamino-)propyl-trimethylammonium-chlorid (59 Gew.-%), Acrylsäure (2 Gew.-%) und einem Gemisch aus dem hydrophob assoziierenden Monomer M8 (2 Gew.-%) und einem erfindungsgemäßen Monomer M5 (5 Gew.-%)

Es wurde wie in Beispiel 9 vorgegangen, nur wurden die folgenden Komponenten eingesetzt:

| | |
|---|---|
| 170 g | destilliertes Wasser, |
| 1,6 g | Siliconentschäumer, |
| 6,9 g | Acrylsäure (99,5 Gew.-%ig; 4,3 Mol-%), |
| 338,2 g | 3-(Acrylamino-)propyl-trimethylammoniumchlorid (60 Gew.-%ige Lösung in Wasser; 44,6 Mol-%), |
| 111,2 g | Dimethylacrylamid (50,6 Mol-%), |
| 14,4 g | Monomer M8 (60 Gew.-%ige Lösung in Wasser), |
| 17,2 g | Monomers M5 |

### Beispiel 11:

Hydrophob, assoziierendes Copolymere vom Typ (A2) aus Acrylamid (10 Gew.-%), N-Vinylpyrrolidon (28 Gew.-%), Acrylamido-2-methylpropansulfonsäure, Na-Salz (50 Gew.-%), Acrylsäure (2 Gew.-%) und dem erfindungsgemäßen Monomer M6 (10 Gew.-%)

Es wurde wie in Beispiel 9 vorgegangen, nur wurden die folgenden Komponenten eingesetzt:

| | |
|---|---|
| 170 g | destilliertes Wasser, |
| 1,6 g | Siliconentschäumer, |
| 2,4 g | Pentanatriumdiethylentriaminpentaacetat, |
| 6,1 g | Acrylsäure (99,5 Gew.-%ig; 4,2 Mol-%), |
| 336,1 g | Acrylamido-2-methylpropansulfonsäure, Na-Salz (58 Gew.-%ige Lösung in Wasser; 36,2 Mol-%), |
| 60,9 g | Acrylamid (50 Gew.-%ige Lösung in Wasser; 21,2 Mol-%), |
| 85,9 g | N-Vinylpyrrolidon (38,1 mol %) |
| 30,4 g | Monomer M6 |

### Beispiel 12:

Hydrophob, assoziierende Copolymere vom Typ (A2) aus Acrylamid (10 Gew.-%), N-Vinylpyrrolidon (38,1 Gew.-%), 3-(Acrylamino-)propyl-trimethylammonium-chlorid (50 Gew.-%), Acrylsäure (2 Gew-%) und dem erfindungsgemäßen Monomer M6 (10 Gew.-%)

Es wurde wie in Beispiel 9 vorgegangen, nur wurden die folgenden Komponenten eingesetzt:

| | |
|---|---|
| 170 g | destilliertes Wasser, |
| 1,6 g | Siliconentschäumer, |
| 2,4 g | Pentanatriumdiethylentriaminpentaacetat, |
| 7,7 g | Acrylsäure (99,5 Gew.-%ig; 4,1 Mol-%), |
| 320,0 g | 3-(Acrylamino-)propyl-trimethylammoniumchlorid (60 Gew.-%ige Lösung in Wasser; 36,2 Mol-%), |
| 79,4 g | Acrylamid (50 Gew.-%ige Lösung in Wasser; 21,2 Mol-%), |
| 108,6 | N-Vinylpyrrolidon (38,1 mol %), |
| 38,4 g | Monomer M6 |

### Beispiel 13:

Hydrophob, assoziierendes Copolymer vom Typ (A3) aus Dimethylacrylamid (19,2 Gew.-%), Acrylamido-2-methylpropansulfonsäure, Na-Salz (77 Gew.-%) und einem Gemisch aus dem hydrophob assoziierenden Monomer M8 (0,8 Gew.-%) und einem erfindungsgemäßen Monomer M1 (3 Gew.-%)

In einem 2 I-Dreihalskolben mit Rührer und Thermometer wurden die folgenden Komponenten miteinander gemischt:

| | |
|---|---|
| 1377 g | destilliertes Wasser, |
| 3 g | Siliconentschäumer, |
| 315 g | Acrylamido-2-methylpropansulfonsäure, Na-Salz (58 Gew.-%ige Lösung in Wasser; 65,5 Mol-%), |
| 35,8 g | Dimethylacrylamid (34,1 Mol-%), |
| 2,6 g | Monomer M8 (60 Gew.-%ige Lösung in Wasser), |
| 5,6 g | Monomer M1, |

Die Lösung wurde mit 20 %ige Natronlauge auf pH 7 eingestellt, durch 10 min Spülen mit Stickstoff inertisiert, auf ca. 50°C aufgeheizt und es wurden nacheinander 1500 ppm Natriumperoxodisulfat (als 20 Gew.-%ige Lösung) und 240 ppm Tetraethylenpentamin (als 20 Gew.-%ige Lösung) zugesetzt. Nach ca. 2 St. wurde die Polymerlösung in einem Umlufttrockenschrank bei ca. 90 bis 120°C in Vakuum bis zur Gewichtskonstanz getrocknet und schließlich aufgemahlen.

### Beispiel 14:

Hydrophob, assoziierendes Copolymer vom Typ (A3) aus Dimethylacrylamid (35 Gew.-%), Acrylamido-2-methylpropansulfonsäure, Na-Salz (60 Gew.-%) und dem erfindungsgemäßen Monomer M1 (5 Gew.-%)

In einem 2 I-Dreihalskolben mit Rührer und Thermometer wurden die folgenden Komponenten miteinander gemischt:

| | |
|---|---|
| 539,2 g | Acrylamido-2-methylpropansulfonsäure, Na-Salz (58 Gew.-%ge Lösung in Wasser; 44,9 mol-%), |
| 1,6 g | Siliconentschäumer, |
| 143,51 g | Dimethylacrylamid (54,7 mol %), |
| 20,4 g | Monomer M1 |

Als Molekulargewichtsregler wurden 4 g Ameisensäure (10 Gew-%ige Lösung in Wasser) zugegeben. Die Lösung wurde mit 20 %ige Natronlauge auf pH 7 eingestellt, durch 10 min Spülen mit Stickstoff inertisiert und auf ca. 5°C abgekühlt. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 6 ppm tert.-Butylhydroperoxid (als0,1 Gew.-%ige Lösung), 6 ppm Natriumhydroxymethansulfinat (als 1 Gew.-%ige Lösung) und 3 ppm FeSO₄*7H₂O (als 1 Gew.-%ige Lösung) zugesetzt. Die Aufarbeitung erfolgte wie oben beschrieben.

### Vergleichsbeispiel 4:

Hydrophob, assoziierendes Copolymer mit Acrylamid und 3-(Acrylamino-)propyl-trimethylammoniumchlorid ohne erfindungsgemäße Monomere

Es wurde wie in Beispiel 9 vorgegangen, nur wurden die folgenden Komponenten eingesetzt:

| | |
|---|---|
| 170 g | destilliertes Wasser, |
| 1,6 g | Siliconentschäumer, |
| 2,4 g | Pentanatriumdiethylentriaminpentaacetat, |
| 5,4 g | Acrylsäure (99,5 Gew.-%ig; 2,9 Mol-%), |
| 148 g | 3-(Acrylamino-)propyl-trimethylammoniumchlorid (60 Gew.-%ige Lösung in Wasser; 18,3 Mol-%), |
| 259,7 g | Acrylamid (50 Gew.-%ige Lösung in Wasser; 78,6 Mol-%), |
| 20,0 g | Polyethylenglykol-(3000)-vinyloxybutylether (VOB, 60 Gew.-%ige Lösung in Wasser; 0,2 mol %), |
| 8,0 g | MonomersM8 (60 Gew.-%ige Lösung in Wasser). |

### Vergleichsbeispiel 5:

Hydrophob assoziierendes Copolymer mit Dimethylacrylamid und Acrylamido-2-methylpropansulfonsäure, Na-Salz ohne erfindungsgemäßes Monomer

Es wurde wie in Beispiel 9 vorgegangen, nur wurden die folgenden Komponenten eingesetzt:

| | |
|---|---|
| 170 g | destilliertes Wasser, |
| 1,6 g | Siliconentschäumer, |
| 2,4 g | Pentanatriumdiethylentriaminpentaacetat, |
| 528 g | Acrylamido-2-methylpropansulfonsäure, Na-Salz (58 Gew.-%ige Lösung in Wasser; 48,1 mol %), |
| 175 g | Acrylamid (50 Gew.-%ige Lösung in Wasser; 51,5 Mol-%), |
| 29,2 g | Polyethylenglykol-(3000)-vinyloxybutylether (VOB, 60 Gew.-%ige Lösung in Wasser; 0,2 mol %), |
| 11,9 g | Monomer M8 (60 Gew.-%ige Lösung in Wasser), |

### Vergleichsbeispiel 6:

In einem 2 I-Dreihalskolben mit Rührer und Thermometer wurden die folgenden Komponenten miteinander gemischt:

| | |
|---|---|
| 1,6 g | Siliconentschäumer, |
| 578,0 g | Acrylamido-2-methylpropansulfonsäure, Na-Salz (58 Gew.-%ige Lösung in Wasser; 62,2 mol-%), |
| 104,8g | Acrylamid (50 Gew.-%ige Lösung in Wasser; 36,4 mol %), |
| 43,5g | Polyethylenglykol-(1100)-vinyloxybutylether (VOB, 60 Gew.-%ige Lösung in Wasser) |

Als Molekulargewichtsregler wurden 300 ppm Ameisensäure (10 Gew-%ige Lösung in Wasser) zugegeben. Die Lösung wurde mit 20 %ige Natronlauge auf pH 7 eingestellt, durch 10 min Spülen mit Stickstoff inertisiert und auf ca. 5°C abgekühlt. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 6 ppm tert.-Butylhydroperoxid (als 0,1 Gew.-%ige Lösung), 6 ppm Natriumhydroxymethansulfinat (als 1 Gew.-%ige Lösung) und 3 ppm FeSO₄*7H₂O (als 1 Gew.-%ige Lösung) zugesetzt. Die Aufarbeitung erfolgte wie oben beschrieben.

### Teil B-3) Herstellung hydrophob assoziierender Copolymerdispersionen vom Typ (A4)

### Vergleichsbeispiel 7

Die Copolymerisatherstellung erfolgte gemäß der nachstehend beschriebenen Methode. Die resultierende wässrige Polymerdispersion enthielt die Copolymerisate in deren Säureform.

In einer Rührapparatur, bestehend aus einem 4 Liter HWS Gefäß mit Ankerrührer (150 Upm), Rückflusskühler, Innenthermofühler und Dosierstation, wurden als Vorlage 484,5 g vollentsalztes Wasser (VE-Wasser) und 8,21 g eines Emulgators (Natriumlaurylethersulfat; 28 %ig in Wasser) gemischt.

Dieser Lösung wurden bei 75 °C 12,49 g einer 7%igen wässrigen Natriumperoxodisulfat-Lösung zugegeben und die Mischung bei 75 °C während 5 Minuten gerührt. Danach wurden bei 75 °C unter weiterem Rühren eine Emulsion bestehend aus 429,91 g vollständig entsalztem Wasser, den Monomeren (140,82 g Methacylsäure, 161 g Ethylacrylat, und 161 g n-Butylacrylat) und 16,43 g Natriumlaurylethersulfat (27-28%ig in Wasser) während 2 Stunden gleichmäßig zudosiert. Anschließend wurde die Reaktionsmischung noch 1 Std. bei 75°C gerührt und danach auf Raumtemperatur gebracht. Bei Raumtemperatur wurden 0,23 g einer 4 %igen Lösung von [EDTA-Fe]K (CAS-Nr. 54959-35-2) und 9,2 g einer 5%igen Wasserstoffperoxidlösung zugegeben und 69 g einer 1 %igen Ascorbinsäure-Lösung während 30 min. gleichmäßig zudosiert. Man erhielt eine wässrige Polymerdispersion mit 31 % Feststoffgehalt.

Zur Charakterisierung der Dispersion wurden folgende Werte gemessen:

### Feststoffgehalt:

Die Dispersion wurde 30 min bei 140 °C getrocknet und der Feststoffgehalt in Prozent aus dem Verhältnis Trockenrückstand zu Einwaage bestimmt.

### Teilchengröße:

Die Dispersion wurde auf 0,01 % verdünnt und die Teilchengröße über Lichtstreuung im High Performance Particle Sizer 5001 (HPPS) von der Firma Malvern Instruments gemessen.

### LD-Wert:

Die Dispersion wurde auf 0,01 % verdünnt und die Lichtdurchlässigkeit (LD) der Dispersion im Vergleich zu reinem Wasser als ein Maß für die Teilchengröße optisch im Hach DR/2010 gemessen.

Die Ergebnisse sind in Tabelle 2 zusammengefasst.

### Beispiel 15

In einer Rührapparatur, bestehend aus einem 4 Liter HWS Gefäß mit Ankerrührer (150 Upm), Rückflusskühler, Innenthermofühler und Dosierstation, wurden als Vorlage 484,5 g entsalztes Wasser (VE-Wasser) und 4,11 g eines Emulgators 28%ig (Natriumlaurylethersulfat; 28%ig in Wasser) in Wasser gemischt.

Dieser Lösung wurden bei 75 °C 12,49 g einer 7%igen wässrigen Natriumperoxodisulfat-Lösung zugegeben und die Mischung bei 75 °C während 5 Minuten gerührt. Danach wurden bei 75 °C unter weiterem Rühren die Emulsion bestehend aus 429,91 g vollständig entsalztem Wasser (VE-Wasser), den Monomeren 140,82 g Methacylsäure, 149,94 g Ethylacrylat, 159,56g n-Butylacrylat, und 12,5 g des erfindungsgemäßen Assoziativmonomers M1 und 20,54 g Natriumlaurylethersulfat (28%ig in Wasser) während 2 Stunden gleichmäßig zudosiert. Anschließend wurde die Reaktionsmischung noch 1 Std. bei 75°C gerührt und danach auf Raumtemperatur gebracht. Bei Raumtemperatur wurden 0,23 g einer 4 %igen Lösung von [EDTA-Fe]K (CAS-Nr. 54959-35-2) und 9,2 g einer 5%igen Wasserstoffperoxidlösung zugegeben und 69 g einer 1 %igen Ascorbinsäure-Lösung während 30 min. gleichmäßig zudosiert. Man erhielt eine wässrige Polymerdispersion mit 31 % Feststoffgehalt.

Die Dispersion wurde wie oben beschrieben charakterisiert. Die Ergebnisse sind in Tabelle 2 zusammengefasst.

### Beispiele 16 bis 21

Weitere Dispersionen wurden analog der Vorschrift von Beispiel 15 hergestellt, nur wurde jeweils das hydrophob assoziierende Monomer M1 durch ein anderes Monomer M2 bis M7 ersetzt. Die Dispersion wurden jeweils wie oben beschrieben charakterisiert. Die Ergebnisse sind jeweils in Tabelle 2 zusammengefasst.

**Tabelle 2: Daten der erhaltenen Dispersionen**

| Copolymer-Nr. | Hydrophob assoziierendes Monomer | Anzahl EO-Einheiten | Anzahl Pentenoxid-Einheiten | Feststoffgehalt (%) | Teilchengröße (nm) | LD-0,1%ig (%) |
|---|---|---|---|---|---|---|
| V 7 | ohne | | | | | |
| 15 | M1 | 22 | 8 | 31,1 | 76 | 97 |
| 16 | M7 | 132 | 8 | 31,0 | 65 | 98 |
| 17 | M5 | 68 | 8 | 30,8 | 63 | 98 |
| 18 | M6 | 68 | 12 | 30,3 | 63 | 98 |
| 19 | M2 | 22 | 12 | 31,0 | 64 | 98 |
| 20 | M3 | 22 | 16 | 30,8 | 66 | 98 |
| 21 | M4 | 22 | 20 | 30,8 | 63 | 98 |

### Teil C) Anwendungstechnische Tests

### Teil C-1) Test der Copolymere vom Typ A1

### Bestimmung des Gelanteils:

1 g des jeweiligen Copolymers wird in 249 g synthetischem Meerwasser nach DIN 50900 24 h lang bis zum vollständigen Lösen gerührt. Anschließend wird die Lösung über ein 200 µm Sieb filtriert und das Volumen des auf dem Sieb verbleibenden Rückstands gemessen. Dieser Wert ist der Gelanteil.

### Bestimmung der Viskosität:

Von dem Filtrat wird mit einem Rheometer mit Doppelspaltgeometrie die Viskosität bei 7 s⁻¹ und 60°C gemessen.

Die Ergebnisse sind in den Tabellen 3 und 4 zusammengestellt.

**Tabelle 3: Ergebnisse der anwendungstechnischen Versuche mit amphoteren Copolymeren des Typs (A1)**

| Copolymer | Hydrophob assoziierendes Monomer | Gelanteil [ml] | Viskosität [mPas] |
|---|---|---|---|
| Beispiel 1 | M1 | < 5 | 25 |
| V 1 | ohne | < 5 | 10 |
| V2 | M8 | 8 | 16 |
| V3 | M9 | 9 | 12 |

**Tabelle 4: Ergebnisse der anwendungstechnischen Versuche mit Copolymeren des Typs (A1) aus Acrylamid und AMPS**

| Copolymer | Verwendetes Monomer | Anzahl EO-Einheiten | Anzahl Pentenoxid-Einheiten | Viskosität [mPas] |
|---|---|---|---|---|
| Beispiel 2 | M1 | 22 | 8 | 27 |
| Beispiel 3 | M2 | 22 | 12 | 52 |
| Beispiel 4 | M3 | 22 | 16 | 9 |
| Beispiel 5 | M4 | 22 | 20 | 22 |
| Beispiel 6 | M5 | 68 | 8 | 17 |
| Beispiel 7 | M6 | 68 | 12 | 30 |
| Beispiel 8 | M7 | 132 | 8 | 3 |

Die Daten in Tabelle 3 zeigen, dass die Lösung des erfindungsgemäßen Copolymers gemäß Beispiel 1 in Meerwasser die höchste Viskosität von allen getesteten Copolymeren bei gleichzeitig niedrigem Gelanteil aufweist. Das Copolymer gemäß Vergleichsbeispiel 1, also ohne Monomere, die hydrophob assoziieren können, weist ebenfalls einen niedrigen Gelanteil auf, naturgemäß ist aber auch die Viskosität geringer. Die Monomere gemäß Stand der Technik M8 und M9 erhöhen zwar erwartungsgemäß die Viskosität, aber bei weitem nicht so stark wie die erfindungsgemäß verwendeten Monomere und außerdem ist der Gelanteil jeweils signifikant höher.
Tabelle 4 zeigt, dass die Viskosität der erfindungsgemäßen Copolymere von der Natur der verwendeten Monomere abhängt. Beispiel 3 repräsentiert die beste, derzeit bekannte Ausführungsform der Erfindung.

### Teil C-2) Test der Copolymere vom Typ (A2) und (A3)

### Test in einem Fliesenklebemörtel:

Die Eigenschaften der Copolymere vom Typ (A2) wurden in einer Testmischung eines Fliesenklebemörtels getestet. Die Zusammensetzung der Testmischung ist in DE 10 2006 050 761 A1, Seite 11, Tabelle 1 dargestellt. Hierbei handelt es sich um eine gebrauchsfertig formulierte Trockenmischung, der jeweils 0,5 Gew.-% des zu testenden hydrophob assoziierenden Copolymers in fester Form zugemischt wurde. Im Anschluss an die Trockenvermischung wurde eine bestimmte Wassermenge zugegeben und mittels einer geeigneten Mischvorrichtung (Bohrmaschine mit G3-Mischer) intensiv verrührt. Die erforderliche Mischzeit wurde gemessen. Der Fliesenkleber wurde zunächst 5 min reifen lassen.

Mit dem angerührten Fliesenklebemörtel wurden die folgenden Tests vorgenommen:

| | |
|---|---|
| Ausbreitmaß | Die Bestimmung des Ausbreitmaßes wurde gemäß DIN 18555, Teil 2 vorgenommen und erfolgte unmittelbar nach der Reifezeit sowie ggf. zu späteren Zeitpunkten. |
| Wasserretention | Die Wasserretention wurde 15 min nach dem Anrühren gemäß DIN 18555, Teil 7 ermittelt. |
| Benetzung | Die Fliesenkleberformulierung wurde auf einer Betonplatte gemäß EN 1323 appliziert und nach 10 min eine Fliese (5 cm x 5 cm) aufgelegt. Danach wurde die Fliese für 30 s mit einem Gewicht von 2 kg belastet. Nach weiteren 60 min wurde die Fliese abgenommen und es wurde ermittelt, zu welchem Prozentsatz die Fliesenrückseite noch mit Fliesenmörtel behaftet war. |
| Abrutschen | Das Abrutschen wurde 3 min nach dem Anrühren gemäß DIN EN 1308 ermittelt. Angegeben wird die Wegstrecke des Abrutschens in mm. |
| Klebrigkeit | Die Bestimmung der Klebrigkeit bzw. Leichtgängigkeit der Testmischung erfolgte durch einen qualifizierten Fachmann. |
| Luftporenstabilität | Die Bestimmung der Luftporenstabilität erfolgte visuell durch einen qualifizierten Fachmann. |

Die jeweils verwendeten Copolymere und die erhaltenen Ergebnisse sind in Tabelle 5 zusammengestellt.

### Test in einem selbstverdichtenden Beton

Die Eigenschaften der Copolymere vom Typ (A3) wurden in einer Testmischung eines selbstverdichtenden Betons gestestet. Die Zusammensetzung der Testmischung ist in DE 10 2004 032 304 A1, Seite 23, Tabelle 11 dargestellt. Die zu testenden Polymere werden jeweils in einer Menge von 0,02 Gew.-% eingesetzt.

Die Herstellung der Mörtelmischungen erfolgte gemäß Abschnitt [0105] von DE 10 2004 032 304 A1, die Bestimmung der Fließfähigkeit (Setzfließmaß) wurde gemäß der in Abschnitt [0106] beschriebenen Methode vorgenommen, und das Bluten und die Sedimentation wurden visuell durch einen Fachmann beurteilt. Die Werte wurden einmal direkt nach dem Anrühren und einmal nach 20 Minuten.

Die jeweils verwendeten Copolymere und die erhaltenen Ergebnisse sind in Tabelle 6 zusammengestellt.

**Tabelle 5: Ergebnisse der Beispiele und Vergleichsbeispiele**

| Copolymer | Beispiel 6 | Beispiel 9 | Beispiel 10 | Beispiel 11 | Beispiel 12 | V4 | V5 | V6 |
|---|---|---|---|---|---|---|---|---|
| | | | | | | | | Celluloseether MHPC 30000 |
| | | | | | | | | |
| Mischzeit [s] | 16 | 18 | 20 | 15 | 12 | 16 | 18 | 6 |
| Ausbreitmaß | 19,0 | 18,4 | 18,3 | 20.5 | 18,1 | 17,2 | 18,2 | 16,2 |
| Wasserretention [%] | 98,0 | 98,1 | 98,0 | 97,7 | 98,0 | 97,8 | 98,1 | 98,6 |
| Benetzung [%] | 88,2 | 95 | 87 | 90 | 93 | 89 | 91 | 70 |
| Abrutschen [mm] | 3 | 2 | 1 | 5 | 2 | 2 | 3 | 8 |
| Klebrigkeit | gut | hoch | hoch | gut | hoch | hoch | hoch | Sehr hoch |
| Luftporenstabilität | gut | sehr gut | sehr gut | gut | sehr gut | gut | sehr gut | gut |

**Tabelle 6: Ergebnisse der Beispiele und Vergleichsbeispiel**

| Copolymer | Beispiel 8 | Beispiel 13 | Beispiel 14 | V7 | V8 |
|---|---|---|---|---|---|
| | | | | Ohne Polymer | Polymer gemäß DE102004032304 A1 Beispiel 8 |
| | | | | | |
| Setzfließmaß (sofort) [cm] | 72,5 | 73 | 72 | 75 | 74 |
| Bluten (sofort) | Nein | Nein | nein | stark | nein |
| Sedimentation (sofort) | Nein | Nein | nein | stark | nein |
| Setzfließmaß (nach 20 min) [cm] | 72 | 73 | 72 | 74 | 72 |
| Bluten (nach 20 min) | Nein | Nein | nein | stark | nein |
| Sedimentation (nach 20 min) | Nein | Nein | nein | stark | nein |

### Teil C-3) Test der Copolymere vom Typ A4

### Herstellung eines beispielhaften Flüssigwaschmittels

Man stellte die folgenden Stammformulierungen her (Gew.-%, bezogen auf die Fertigformulierung):

| Komponente | Menge |
|---|---|
| Anionisches Tensid (lineare Alkylbenzolsulfonsäure, C₁₀₋₁₃) | 13,44 |
| nichtionisches Tensid (C_{13/15} Oxoalohol, alkoxyliert mit ca. 7 EO-Einheiten) | 7,5 |
| Kokosölfettsäure | 8,5 |
| KOH | 4,38 |
| Natriumcitratdihydrat | 3 |
| 1,2-Propylenglykol | 8 |
| Ethanol | 2 |
| Wasser | qs |

Die obigen Bestandteile wurden gemischt und mit Wasser auf 90 Gew.-% aufgefüllt, d.h. es verblieb eine Formulierungslücke von 10 Gew.-%. Die Stammformulierungen wurden mit KOH auf pH 8,6 eingestellt.

Für die (unverdickten) Referenzformulierungen wurden die Stammformulierungen mit Wasser auf 100 Gew.-% aufgefüllt. Für die verdickten Testformulierungen wurden die Stammformulierungen mit Verdickerdispersion und Wasser aufgefüllt, so dass sich unter Berücksichtigung des Feststoffgehalts der Dispersion eine Verdickerkonzentration von 1,4 Gew.-%, bezogen auf die Fertigformulierung, einstellte. Vor der Viskositätsmessung ließ man die Formulierungen wenigstens 5 Stunden ruhen.

Die Low-Shear-Viskosität wurde unter Berücksichtigung der Vorschriften nach DIN 51550, DIN 53018, DIN 53019 mit dem Brookfield Viskosimeter Modell RV-03 bei einer Drehzahl von 20 Umdrehungen pro Minute mit der Spindel Nr. 62 bei 20 °C gemessen. Die Viskosität der unverdickten Referenzformulierungen betrug 112 mPas.

Zur Quantifizierung der Transparenz der verdickten Formulierungen wurde die Transmission in % bei 440 nm bei 23 °C mit einem LICO 200 der Fa. Dr. Lange gemessen. Die gefundenen Werte für die verdickten Formulierungen sind als Prozentwert, relativ zur Transmission der unverdickten Referenzformulierung angegeben.

Die Ergebnisse sind in den Tabellen 7 zusammengefasst.

**Tabelle 7: Anwendungstechnische Bewertung der Verdickerdispersionen: Formulierung mit 1,4 Gew. % Verdicker**

| Verwendetes Polymer gemäß | Transmission (%) | Low-Shear-Viskosität (mPas) |
|---|---|---|
| Ohne verdickendes Polymer | - | 112 |
| Vergleichsbeispiel 7 (ohne Monomer (a)) | 99 | 1023 |
| Beispiel 15 | 99 | 1392 |
| Beispiel 16 | 100 | 1472 |
| Beispiel 17 | 100 | 1392 |
| Beispiel 18 | 100 | 1424 |
| Beispiel 19 | 100 | 1360 |
| Beispiel 20 | 100 | 1472 |
| Beispiel 21 | 100 | 1408 |

Man erkennt, dass die Verwendung der Verdicker zu einer deutlichen Viskositätserhöung im Vergleich zur Referenzformulierung ohne Verdicker führt.

Die Beispiele 15 bis 21, die die erfindungsgemäßen hydrophob assoziierenden Monomere enthalten, ergeben eine deutlich höhere Viskosität als die Vergleichsprobe 7, die kein hydrophob assoziierendes Monomer enthält. Die Verwendung der erfindungsgemäßen Assoziativmonomere beeinträchtigt dabei nicht die hohe Transparenz der Flüssigwaschmittelformulierung, ausgedrückt durch die Transmissionsmessung.

## Patentansprüche

1. Wasserlösliches, hydrophob assoziierende Copolymer umfassend mindestens
(a) 0,1 bis 20 Gew.% mindestens eines monoethylenisch ungesättigten, hydrophob assoziierenden Monomers (a), sowie
(b) 25 Gew.-% bis 99,9 Gew.-% mindestens eines davon verschiedenen, monoethylenisch ungesättigten, hydrophilen Monomers (b),
wobei die Mengenangaben jeweils auf die Gesamtmenge aller Monomere im Copolymer bezogen sind, **dadurch gekennzeichnet, dass** es sich bei mindestens einem der Monomere (a) um ein Monomer der allgemeinen Formel (I)
H₂C-C(R¹)-R⁴-O-(-CH₂-CH(R²)-O-)ₖ-(-CH₂-CH(R³)-O-)ᵢ-R⁵ (I)
handelt, wobei die Einheiten -(-CH₂-CH(R²)-O-)ₖ und -(-CH₂CH(R³)-O-)ᵢ in Blockstruktur in der in Formel (I) dargestellten Reihenfolge angeordnet sind und die Reste und Indices die folgende Bedeutung haben:
k: eine Zahl von 10 bis 150,
l: eine Zahl von 5 bis 25,
R¹: H oder Methyl,
R²: unabhängig voneinander H, Methyl oder Ethyl, mit der Maßgabe, dass es sich bei mindestens 50 mol % der Reste R² um H handelt,
R³: unabhängig voneinander ein Kohlenwasserstoffrest mit mindestens 2 Kohlenstoffatomen oder eine Ethergruppe der allgemeinen Formel -CH₂-O-R^{2'}, wobei R^{2'} für einen Kohlenwasserstoffrest mit mindestens 2 Kohlenstoffatomen steht,
R⁴: eine zweiwertige, verknüpfende Gruppe, -O-(C_{n'}H_{2n'})- [R^{4b}], wobei n' für eine natürliche Zahl von 1 bis 6 steht,
R⁵: H oder ein Kohlenwasserstoffrest mit 1 bis 30 C-Atomen.

2. Copolymer gemäß Anspruch 1, **dadurch gekennzeichnet, dass** es sich bei R³ um einen Kohlenwasserstoffrest mit mindestens 3 Kohlenstoffatomen handelt.

3. Copolymer gemäß Anspruch 1 oder 2, **dadurch gekennzeichnet, dass** es sich bei R¹ um H und bei R⁴ um eine Gruppe ausgewählt aus -CH₂- oder -O-CH₂-CH₂-CH₂-CH₂-handelt.

4. Copolymer gemäß einem der Ansprüche 1 bis 3, **dadurch gekennzeichnet, dass** es sich bei R⁵ um H handelt.

5. Copolymer gemäß einem der Ansprüche 1 bis 4, **dadurch gekennzeichnet, dass** es sich bei mindestens einem der Monomere (b) um ein saure Gruppen umfassendes Monomer bzw. dessen Salze handelt.

6. Copolymer gemäß Anspruch 5, **dadurch gekennzeichnet, dass** es sich bei den sauren Gruppen um mindestens eine Gruppe ausgewählt aus der Gruppe von -COOH, -SO₃H und -PO₃H₂ bzw. deren Salze handelt.

7. Copolymer gemäß einem der Ansprüche 1 bis 4, **dadurch gekennzeichnet, dass** es sich um ein Copolymer (A1) handelt, welches mindestens zwei verschiedene hydrophile Monomere (b) umfasst, und es sich dabei um mindestens
• ein neutrales hydrophiles Monomer (b1), und
• mindestens ein hydrophiles anionisches Monomer (b2) handelt, welches mindestens eine saure Gruppe ausgewählt aus der Gruppe von -COOH, -SO₃H oder-PO₃H₂ bzw. deren Salze umfasst.
wobei die Menge der Monomere (a) 0,1 bis 12 Gew.% und die aller Monomere (b) zusammen 70 bis 99,9 Gew.-% bezüglich der Menge aller Monomere im Copolymer beträgt.

8. Copolymer gemäß Anspruch 7, **dadurch gekennzeichnet, dass** es sich bei dem neutralen Monomer (b1) um ein Monomer ausgewählt aus der Gruppe von (Meth)acrylamid, N-Methyl(meth)acrylamid, N, N'-Dimethyl(meth)acrylamid, N-Methylol(meth)acrylamid oder N-Vinyl-2-pyrrolidon handelt, und bei dem Monomer (b2) um mindestens eines ausgewählt aus der Gruppe von (Meth)acrylsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Vinylphosphonsäure.

9. Copolymer gemäß Anspruch 7 oder 8, **dadurch gekennzeichnet, dass** das Copolymer darüber hinaus noch mindestens ein kationisches, Ammoniumgruppen aufweisendes Monomer (b3) umfasst.

10. Copolymer gemäß Anspruch 9, **dadurch gekennzeichnet dass** es sich bei dem kationischen Monomer um Salze von 3-Trimethylammoniumpropyl(meth)acrylamiden und 2-Trimethylammoniumethyl(meth)acrylaten handelt.

11. Copolymer gemäß einem der Ansprüche 7 bis 10, **dadurch gekennzeichnet, dass** die Menge der Monomere (a) 0,1 bis 5 Gew.-% bezüglich der Menge aller Monomere im Copolymer beträgt.

12. Copolymer gemäß einem der Ansprüche 1 bis 4, **dadurch gekennzeichnet, dass** es sich um ein Copolymer (A2) handelt, welches mindestens zwei verschiedene hydrophile Monomere (b) umfasst, und es sich dabei um mindestens
• ein neutrales hydrophiles Monomer (b1), und
• mindestens ein kationisches Monomer (b3) handelt,
wobei die Menge der Monomere (a) 0,1 bis 12 Gew.-% und die aller Monomere (b) zusammen 70 bis 99,9 Gew.-% bezüglich der Menge aller Monomere im Copolymer beträgt.

13. Copolymer gemäß einem der Ansprüche 1 bis 4, **dadurch gekennzeichnet, dass** es sich um ein Copolymer (A3) handelt, welches mindestens zwei verschiedene hydrophile Monomere (b) umfasst, und es sich dabei um mindestens
• 5 bis 50 Gew.-% mindestens eines neutralen hydrophilen Monomers (b1), und
• 25 bis 94,9 Gew.-% mindestens eines Sulfonsäuregruppen umfassenden, anionischen Monomers (b2) handelt,
wobei die Menge der Monomere (a) 0,1 bis 12 Gew.-%, und die aller Monomere (b) zusammen 70 bis 99,9 Gew.-% bezüglich der Menge aller Monomere im Copolymer beträgt.

14. Copolymer gemäß Anspruch 12 oder 13, **dadurch gekennzeichnet, dass** das Copolymer als Monomer (a) zusätzlich mindestens ein Monomer der allgemeinen Formeln H₂C=C(R¹)-COO-(-CH₂-CH(R⁵)-O-)_{q}-R⁶ (IIa) und/oder
H₂C=C(R¹)-O-(-CH₂-CH(R⁵)-O-)_{q}-R⁶ (IIb) umfasst, wobei
R¹ für H oder Methyl,
q für eine Zahl von 10 bis 150,
R⁵ unabhängig voneinander für H, Methyl oder Ethyl, wobei es sich bei mindestens 50 mol % der Reste R⁵ um H handelt, und
R⁶ für einen aliphatischen und/oder aromatischen, geradkettigen oder verzweigten Kohlenwasserstoffrest mit 6 bis 40 Kohlenstoffatomen steht,
mit der Maßgabe, dass mindestens 0,1 Gew.-% der Monomere (a) der Formel (I) eingesetzt werden, und es sich weiterhin bei mindestens 25 Gew.-% der Menge aller Monomere (a) um Monomere der Formel (I) handelt.

15. Copolymer nach einem der Ansprüche 12 bis 14, **dadurch gekennzeichnet, dass** das Copolymer noch bis zu 1 Gew. % eines vernetzenden, mindestens zwei ethylenisch ungesättigte Gruppen umfassenden Monomers (d) umfasst, wobei es sich bei Monomer (d) um mindestens eines ausgewählt wird aus der Gruppe von 1,4-Butandioldi(meth)acrylat , 1,6-Hexandioldi(meth)acrylat, 1,3-Butylengfykoldi(meth)acrylat , Neopentylglykoldi(meth)acrytat, Ethylenglykoldi(meth)acrylat , Diethylenglykoldi(meth)acrylat, Triethylenglykoldi(meth)acrylat oder Oligoethylenglykoldi(meth)acrylate wie bspw. Polyethylenglykol-bis(meth)acrylat, N,N'-Methylenbis(meth)acrylamid, Ethylenglykoldivinylether, Triethylenglykoldivinylether, Triallylamin, Triallylaminmethammoniumchlorid, Tetraallylammoniumchlorid und Tris(2-hydroxy)isocyanurattri(meth)acrylat handelt.

16. Copolymer gemäß Anspruch 1 oder 2, **dadurch gekennzeichnet, dass** es sich um ein Copolymer (A4) handelt, welches
• mindestens ein COOH-Gruppen umfassendes Monomer (b), sowie
• mindestens ein Monomer (c) der allgemeinen Formel H₂C=C(R¹⁶)-COOR¹⁸ umfasst, wobei R¹⁶ für H oder Methyl steht und R¹⁸ für einen geradkettigen oder verzweigten, aliphatischen, cycloaliphatischen und/oder aromatischen Kohlenwasserstoffrest mit 1 bis 30 Kohlenstoffatomen,
wobei die Menge aller Monomere (a) zusammen 0,1 bis 20 Gew.-%, die aller Monomere (b) 25 bis 94,9 Gew.-% und die aller Monomere (c) 5 bis 74,9 Gew.-% beträgt.

17. Copolymer gemäß Anspruch 16, **dadurch gekennzeichnet, dass** die Menge aller Monomere (c) zusammen 25 bis 74,5 Gew.-% beträgt.

18. Copolymer gemäß Anspruch 16 oder 17, **dadurch gekennzeichnet, dass** es sich bei mindestens einem der Monomere (c) um eines ausgewählt aus der Gruppe von Ethyl(meth)acrylat, n-Propyl(meth)acrylat, n-Butyl(meth)acrylat, 2-Ethylhexyl(meth)acrylat oder 2-Propylheptyl(meth)acrylat handelt.

19. Verwendung von Copolymeren gemäß einem der Ansprüche 1 bis 11 bei der Erschließung, Ausbeutung und Komplettierung unterirdischer Erdöl- und Erdgaslagerstätten.

20. Verwendung von Copolymeren gemäß einem der Ansprüche 1 bis 11 zur tertiären Erdölförderung, indem man eine wässrige Formulierung der besagten Copolymere in einer Konzentration von 0,01 bis 5 Gew.-% durch mindestens eine Injektionsbohrung in eine Erdöllagerstätte eingepresst und der Lagerstätte durch mindestens eine Produktionsbohrung Rohöl entnimmt.

21. Verwendung gemäß Anspruch 20, **dadurch gekennzeichnet, dass** die wässrige Formulierung zusätzlich mindestens ein Tensid umfasst.

22. Verwendung von Copolymeren gemäß einem der Ansprüche 1 bis 15 als Additiv für wässrige Baustoffsysteme, die hydraulische Bindemittelsysteme enthalten.

23. Verwendung von Copolymeren gemäß einem der Ansprüche 1 bis 6 sowie 16 bis 18 zur Herstellung von flüssigen Wasch- und Reinigungsmitteln.

## Claims

1. A water-soluble, hydrophobically associating copolymer comprising at least
(a) 0.1 to 20% by weight of at least one monoethylenically unsaturated, hydrophobically associating monomer (a), and
(b) 25% by weight to 99.9% by weight of at least one monoethylenically unsaturated hydrophilic monomer (b) different therefrom,
where the quantitative data are based in each case on the total amount of all of the monomers in the copolymer, wherein at least one of the monomers (a) is a monomer of the general formula (I)
H₂C=C(R¹)-R⁴-O-(-CH₂-CH(R²)-O-)ₖ-(-CH₂-CH (R³)-O-)ₗ-R⁵ (I)
where the units -(-CH₂-CH(R²)-O-)ₖ and -(-CH₂-CH(R³)-O-)ₗ are arranged in block structure in the order shown in formula (I) and the radicals and indices have the following meaning:
k: a number from 10 to 150,
l: a number from 5 to 25,
R¹: H or methyl,
R²: independently of one another, H, methyl or ethyl, with the proviso that at least 50 mol% of the radicals R² are H,
R³: independently of one another, a hydrocarbon radical having at least 2 carbon atoms or an ether group of the general formula -CH₂-O-R^{2'}, where R^{2'} is a hydrocarbon radical having at least 2 carbon atoms,
R⁴: a divalent linking group, -O-(C_{n'}H_{2n'})-[R^{4b}], where n' is a natural number from 1 to 6,
R⁵: H or a hydrocarbon radical having 1 to 30 carbon atoms.

2. The copolymer according to claim 1, wherein R³ is a hydrocarbon radical having at least 3 carbon atoms.

3. The copolymer according to claim 1 or 2, wherein R¹ is H and R⁴ is a group selected from -CH₂- or -O-CH₂-CH₂-CH₂-CH₂-.

4. The copolymer according to any one of claims 1 to 3, wherein R⁵ is H.

5. The copolymer according to any one of claims 1 to 4, wherein at least one of the monomers (b) is a monomer comprising acid groups or salts thereof.

6. The copolymer according to claim 5, wherein the acidic groups are at least one group selected from the group of -COOH, -SO₃H and -PO₃H₂ or salts thereof.

7. The copolymer according to any one of claims 1 to 4, which is a copolymer (A1) which comprises at least two different hydrophilic monomers (b), and these are at least
• one neutral hydrophilic monomer (b1), and
• at least one hydrophilic anionic monomer (b2) which comprises at least one acid group selected from the group of -COOH, -SO₃H or -PO₃H₂ or salts thereof,
where the amount of the monomers (a) is 0.1 to 12% by weight and that of all the monomers (b) together is 70 to 99.9% by weight with regard to the amount of all of the monomers in the copolymer.

8. The copolymer according to claim 7, wherein the neutral monomer (b1) is a monomer selected from the group of (meth)acrylamide, N-methyl(meth)acrylamide, N,N'-dimethyl(meth)acrylamide, N-methylol(meth)acrylamide or N-vinyl-2-pyrrolidone, and the monomer (b2) is at least one selected from the group of (meth)acrylic acid, vinylsulfonic acid, allylsulfonic acid, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid or vinylphosphonic acid.

9. The copolymer according to claim 7 or 8, wherein the copolymer moreover also comprises at least one cationic monomer (b3) having ammonium groups.

10. The copolymer according to claim 9, wherein the cationic monomer is salts of 3-trimethylammonium propyl(meth)acrylamides and 2-trimethylammonium ethyl (meth)acrylates.

11. The copolymer according to any one of claims 7 to 10, wherein the amount of the monomers (a) is 0.1 to 5% by weight with regard to the amount of all of the monomers in the copolymer.

12. The copolymer according to any one of claims 1 to 4, which is a copolymer (A2) which comprises at least two different hydrophilic monomers (b), and these are at least
• one neutral hydrophilic monomer (b1), and
• at least one cationic monomer (b3),
where the amount of the monomers (a) is 0.1 to 12% by weight and that of all of the monomers (b) together is 70 to 99.9% by weight with regard to the amount of all of the monomers in the copolymer.

13. The copolymer according to any one of claims 1 to 4, which is a copolymer (A3) which comprises at least two different hydrophilic monomers (b), and these are at least
• 5 to 50% by weight of at least one neutral hydrophilic monomer (b1), and
• 25 to 94.9% by weight of at least one anionic monomer (b2) comprising sulfonic acid groups,
where the amount of the monomers (a) is 0.1 to 12% by weight, and that of all of the monomers (b) together is 70 to 99.9% by weight with regard to the amount of all of the monomers in the copolymer.

14. The copolymer according to claim 12 or 13, wherein the copolymer comprises, as monomer (a), additionally at least one monomer of the general formulae H₂C=C(R¹)-COO-(-CH₂-CH(R⁵)-O-)_{q}-R⁶ (IIa) and/or
H₂C=C(R¹)-O-(-CH₂-CH(R⁵)-O-)_{q}-R⁶ (IIb), where
R¹ is H or methyl,
q is a number from 10 to 150,
R⁵, independently of one another, are H, methyl or ethyl, where at least 50 mol% of the radicals R⁵ are H, and
R⁶ is an aliphatic and/or aromatic, straight-chain or branched hydrocarbon radical having 6 to 40 carbon atoms,
with the proviso that at least 0.1 % by weight of the monomers (a) of the formula (I) are used, and furthermore at least 25% by weight of the amount of all of the monomers (a) are monomers of the formula (I).

15. The copolymer according to any one of claims 12 to 14, wherein the copolymer also comprises up to 1 % by weight of a crosslinking monomer (d) comprising at least two ethylenically unsaturated groups, where monomer (d) is at least one selected from the group of 1,4-butanediol di(meth)acrylate, 1,6-hexanediol di(meth)acrylate, 1,3-butylene glycol di(meth)acrylate, neopentyl glycol di(meth)acrylate, ethylene glycol di(meth)acrylate, diethylene glycol di(meth)acrylate, triethylene glycol di(meth)acrylate or oligoethylene glycol di(meth)acrylates such as, for example, polyethylene glycol bis(meth)acrylate, N,N'-methylenebis(meth)acrylamide, ethylene glycol divinyl ether, triethylene glycol divinyl ether, triallylamine, triallylamine methammonium chloride, tetraallylammonium chloride and tris(2-hydroxy)isocyanurate tri(meth)acrylate.

16. The copolymer according to claim 1 or 2, which is a copolymer (A4) which comprises
• at least one monomer (b) comprising COOH groups, and
• at least one monomer (c) of the general formula H₂C=C(R¹⁶)-COOR¹⁸, where R¹⁶ is H or methyl and R¹⁸ is a straight-chain or branched, aliphatic, cycloaliphatic and/or aromatic hydrocarbon radical having 1 to 30 carbon atoms,
where the amount of all of the monomers (a) together is 0.1 to 20% by weight, that of all of the monomers (b) is 25 to 94.9% by weight and that of all of the monomers (c) is 5 to 74.9% by weight.

17. The copolymer according to claim 16, wherein the amount of all of the monomers (c) together is 25 to 74.5% by weight.

18. The copolymer according to claim 16 or 17, wherein at least one of the monomers (c) is one selected from the group of ethyl (meth)acrylate, n-propyl (meth)acrylate, n-butyl (meth)acrylate, 2-ethylhexyl (meth)acrylate or 2-propylheptyl (meth)acrylate.

19. The use of copolymers according to any one of claims 1 to 11 in the development, exploitation and completion of subterranean mineral oil deposits and natural gas deposits.

20. The use of copolymers according to any one of claims 1 to 11 for enhanced oil recovery by injecting an aqueous formulation of said copolymers in a concentration of 0.01 to 5% by weight through at least one injection bore into a mineral oil deposit and removing crude oil from the deposit through at least one production bore.

21. The use according to claim 20, wherein the aqueous formulation additionally comprises at least one surfactant.

22. The use of copolymers according to any one of claims 1 to 15 as additive for aqueous construction systems which comprise hydraulic binder systems.

23. The use of copolymers according to any one of claims 1 to 6 and 16 to 18 for the production of liquid detergents and cleaners.

## Revendications

1. Copolymère s'associant de manière hydrophobe, soluble dans l'eau, comprenant au moins
(a) 0,1 à 20% en poids d'au moins un monomère (a) éthyléniquement monoinsaturé, s'associant de manière hydrophobe, ainsi que
(b) 25% en poids à 99,9% en poids d'au moins un monomère (b) éthyléniquement monoinsaturé, hydrophile, différent de celui-ci,
les indications de quantités se rapportant à chaque fois à la quantité totale de tous les monomères dans le copolymère, **caractérisé en ce qu'**il s'agit, pour au moins un des monomères (a), d'un monomère de formule générale (I)
H₂C=C(R¹)-R⁴-O-(-CH₂-CH(R²)-O-)ₖ-(-CH₂-CH(R³)-O-)ₗ-R⁵ (I)
les unités -(-CH₂-CH(R²)-O-)ₖ et -(-CH₂-CH(R³)-O-), dans la structure à blocs étant disposées dans l'ordre représenté dans la formule (I) et les radicaux et indices présentant la signification suivante :
k : un nombre de 10 à 150,
l : un nombre de 5 à 25,
R¹ : H ou méthyle,
R² : indépendamment l'un de l'autre, H, méthyle ou éthyle, à condition qu'il s'agisse, pour au moins 50% en mole des radicaux R², de H,
R³ : indépendamment l'un de l'autre, un radical hydrocarboné comprenant au moins 2 atomes de carbone ou un groupe éther de formule générale -CH₂-O-R^{2'}, où R^{2'} représente un radical hydrocarboné comprenant au moins 2 atomes de carbone,
R⁴ : une un groupe de liaison divalent -O-(C_{n'}H2_{n'})-[R^{4b}]- où n' vaut un nombre naturel de 1 à 6,
R⁵ : H ou un radical hydrocarboné comprenant 1 à 30 atomes de carbone.

2. Copolymère selon la revendication 1, **caractérisé en ce qu'**il s'agit, pour R³, d'un radical hydrocarboné comprenant au moins 3 atomes de carbone.

3. Copolymère selon la revendication 1 ou 2, **caractérisé en ce qu'**il s'agit, pour R', de H et pour R⁴ d'un groupe choisi parmi -CH₂- ou -O-CH₂-CH₂-CH₂-CH₂-.

4. Copolymère selon l'une quelconque des revendications 1 à 3, **caractérisé en ce qu'**il s'agit, pour R⁵, de H.

5. Copolymère selon l'une quelconque des revendications 1 à 4, **caractérisé en ce qu'**il s'agit, pour au moins un des monomères (b), d'un monomère comprenant des groupes acides ou, selon le cas, leurs sels.

6. Copolymère selon la revendication 5, **caractérisé en ce qu'**il s'agit, pour les groupes acides, d'au moins un groupe choisi dans le groupe formé par -COOH, -SO₃H et - PO₃H₂ ou, selon le cas, leurs sels.

7. Copolymère selon l'une quelconque des revendications 1 à 4, **caractérisé en ce qu'**il s'agit d'un copolymère (A1), qui comprend au moins deux monomères (b) hydrophiles différents et où il s'agit d'au moins
• un monomère hydrophile neutre (b1), et
• un monomère (b2) anionique hydrophile, qui comprend au moins un groupe acide choisi dans le groupe formé par -COOH, -SO₃H ou -PO₃H₂ ou leurs sels,
la quantité de monomères (a) étant de 0,1 à 12% en poids et celle de tous les monomères (b) ensemble étant de 70 à 99,9% en poids par rapport à la quantité de tous les monomères dans le copolymère.

8. Copolymère selon la revendication 7, **caractérisé en ce qu'**il s'agit, pour le monomère (b1) neutre, d'un monomère choisi dans le groupe formé par le (méth)acrylamide, le N-méthyl(méth)acrylamide, le N,N'-diméthyl(méth)acrylamide, le N-méthylol(méth)acrylamide ou la N-vinyl-2-pyrrolidone et, pour le monomère (b2), d'au moins un monomère choisi dans le groupe formé par l'acide (méth)acrylique, l'acide vinylsulfonique, l'acide allylsulfonique, l'acide 2-acrylamido-2-méthylpropanesulfonique (AMPS), l'acide 2-méthacrylamido-2-méthylpropanesulfonique, l'acide 2-acrylamidobutanesulfonique, l'acide 3-acrylamido-3-méthylbutanesulfonique ou l'acide 2-acrylamido-2,4,4-triméthylpentanesulfonique ou l'acide vinylphosphonique.

9. Copolymère selon la revendication 7 ou 8, **caractérisé en ce que** le copolymère comprend en outre encore au moins un monomère (b3) cationique, présentant des groupes ammonium.

10. Copolymère selon la revendication 9, **caractérisé en ce qu'**il s'agit, pour le monomère cationique, de sels de 3-triméthylammoniumpropyl(méth)acrylamides et de (méth)acrylates de 2-triméthylammoniuméthyle.

11. Copolymère selon l'une quelconque des revendications 7 à 10, **caractérisé en ce que** la quantité de monomères (a) est de 0,1 à 5% en poids par rapport à la quantité de tous les monomères dans le copolymère.

12. Copolymère selon l'une quelconque des revendications 1 à 4, **caractérisé en ce qu'**il s'agit d'un copolymère (A2), qui comprend au moins deux monomères (b) hydrophiles différents et où il s'agit d'au moins
• un monomère hydrophile neutre (b1), et
• au moins un monomère (b3) cationique,
la quantité de monomères (a) étant de 0,1 à 12% en poids et celle de tous les monomères (b) ensemble étant de 70 à 99,9% en poids par rapport à la quantité de tous les monomères dans le copolymère.

13. Copolymère selon l'une quelconque des revendications 1 à 4, **caractérisé en ce qu'**il s'agit d'un copolymère (A3), qui comprend au moins deux monomères (b) hydrophiles différents et où il s'agit d'au moins
• 5 à 50% en poids d'au moins un monomère (b1) hydrophile neutre, et
• 25 à 94,9% en poids d'au moins un monomère (b2) anionique, comprenant des groupes acide sulfonique,
la quantité de monomères (a) étant de 0,1 à 12% en poids et celle de tous les monomères (b) ensemble étant de 70 à 99,9% en poids par rapport à la quantité de tous les monomères dans le copolymère.

14. Copolymère selon la revendication 12 ou 13, **caractérisé en ce que** le copolymère comprend, comme monomère (a), en outre au moins un monomère des formules générales H₂C=C(R¹)-COO-(-CH₂-CH(R⁵)-O-)_{q--}-R⁶ (IIa) et/ou
H₂C=C(R¹)-O-(-CH₂-CH(R⁵)-O-)_{q--}-R⁶ (IIb),
où
R¹ représente H ou méthyle,
q vaut un nombre de 10 à 150,
R⁵ représente, indépendamment l'un de l'autre, H, méthyle ou éthyle, où il s'agit, pour au moins 50% en mole des radicaux R⁵, de H,
R⁶ représente un radical hydrocarboné aliphatique et/ou aromatique, linéaire ou ramifié comprenant 6 à 40 atomes de carbone,
à condition qu'on utilise au moins 0,1 % en poids de monomères (a) de formule (I) et qu'il s'agisse en outre, pour au moins 25% en poids de la quantité de tous les monomères (a), de monomères de formule (I).

15. Copolymère selon l'une quelconque des revendications 12 à 14, **caractérisé en ce que** le copolymère contient encore jusqu'à 1 % en poids d'un monomère (d) réticulant, comprenant au moins deux groupes éthyléniquement insaturés, où il s'agit, pour le monomère (d), d'au moins un monomère choisi dans le groupe formé par le di(méth)acrylate de 1,4-butanediol, le di(méth)acrylate de 1,6-hexanediol, le di(méth)acrylate de 1,3-butylèneglycol, le di(méth)acrylate de néopentylglycol, le di(méth)acrylate d'éthylèneglycol, le di(méth)acrylate de diéthylèneglycol, le di(méth)acrylate de triéthylèneglycol ou les di(méth)acrylates d'oligoéthylèneglycol tel que par exemple le bis(méth)acrylate de polyéthylèneglycol, le N,N'-méthylènebis(méth)acrylamide, l'éthylèneglycoldivinyléther, le triéthylèneglycoldivinyléther, la triallylamine, le chlorure de triallylamineméthammonium, le chlorure de tétraallylammonium et le tris(2-hydroxy)isocyanurate-tri(méth)acrylate.

16. Copolymère selon la revendication 1 ou 2, **caractérisé en ce qu'**il s'agit d'un copolymère (A4), qui comprend
• au moins un monomère (b) comprenant des groupes COOH, ainsi que
• au moins un monomère (c) de formule générale H₂C=C(R¹⁶)-COOR¹⁸, où R¹⁶ représente H ou méthyle et R¹⁸ représente un radical hydrocarboné linéaire ou ramifié, aliphatique, cycloaliphatique et/ou aromatique comprenant 1 à 30 atomes de carbone,
la quantité de tous les monomères (a) ensemble valant 0,1 à 20% en poids, celle de tous les monomères (b) valant 25 à 94,9% en poids et celles de tous les monomères (c) valant 5 à 74,9% en poids.

17. Copolymère façonné selon la revendication 16, **caractérisé en ce que** la quantité de tous les monomères (c) ensemble vaut 25 à 74,5% en poids.

18. Copolymère selon la revendication 16 ou 17, **caractérisé en ce qu'**il s'agit, pour au moins un des monomères (c), d'un monomère choisi dans le groupe formé par le (méth)acrylate d'éthyle, le (méth)acrylate de n-propyle, le (méth)acrylate de n-butyle, le (méth)acrylate de 2-éthylhexyle ou le (méth)acrylate de 2-propylheptyle.

19. Utilisation de copolymères selon l'une quelconque des revendications 1 à 11 lors de l'exploration, de l'exploitation et de la complétion de gisements souterrains de pétrole et de gaz naturel.

20. Utilisation de copolymères selon l'une quelconque des revendications 1 à 11 pour l'exploitation tertiaire de pétrole, en ce qu'on injecte une formulation aqueuse desdits copolymères en une concentration de 0,01 à 5% en poids dans au moins un trou d'injection dans un gisement de pétrole et on prélève du gisement, via au moins un trou de production, du pétrole.

21. Utilisation selon la revendication 20, **caractérisée en ce que** la formulation aqueuse comprend en outre au moins un agent tensioactif.

22. Utilisation de copolymères selon l'une quelconque des revendications 1 à 15 comme additif pour des systèmes de matériau de construction aqueux qui contiennent des systèmes de liant hydraulique.

23. Utilisation de copolymères selon l'une quelconque des revendications 1 à 6 ainsi que 16 à 18 pour la préparation d'agents de lavage et de nettoyage liquides.
